# EUROPÄISCHE PATENTSCHRIFT

(11) **EP 2 708 569 B1**
(45) Veröffentlichungstag und Bekanntmachung des Hinweises auf die Patenterteilung: **23.05.2018**
(21) Anmeldenummer: 13164834.7
(22) Anmeldetag: 23.04.2013
(51) Int. Cl.: C08G 73/14, C08L 79/08, C08G 73/10

(54) **TRANSPARENTE POLYAMIDIMIDE**
TRANSPARENT POLYAMIDE-IMIDES
POLYAMIDE-IMIDES TRANSPARENTES

(30) Priorität: 12.09.2012 EP 12183987
(43) Veröffentlichungstag der Anmeldung: 19.03.2014
(73) Patentinhaber: EMS-PATENT AG, 7013 Domat / Ems (CH)
(72) Erfinder: Hoffmann, Botho, 7013 Domat/Ems (CH); Scherrer, Luc, 7015 Tamins (CH); Hoff, Heinz, 7015 Tamins (CH)
(74) Vertreter: Bremi, Tobias Hans

(56) Entgegenhaltungen:
- EP-A2- 0 136 526
- EP-A2- 0 136 528
- EP-A2- 0 173 211
- EP-A2- 0 291 699
- DE-A1- 1 795 752
- GB-A- 1 397 125
- DATABASE WPI Week 197829 Thomson Scientific, London, GB; AN 1978-52699A XP002688623, & JP 53 019639 B (ASAHI CHEM IND CO LTD) 22. Juni 1978 (1978-06-22)

## Beschreibung

### TECHNISCHES GEBIET

Die vorliegende Erfindung betrifft transparente Polyamidimide und ihre Blends oder Legierungen mit anderen Polymeren, insbesondere Polyamiden, sowie aus ihnen herstellbare resp. hergestellte Formteile, die u.a. hohe Zähigkeit, gute Lösungsmittelbeständigkeit bei gleichzeitig hoher Steifheit und Wärmeformbeständigkeit zeigen.

### STAND DER TECHNIK

Die FR 1427087 beschreibt Dicarbonsäuren auf Basis von Pyromellitsäureanhydrid und Aminosäuren bzw. Lactamen sowie daraus hergestellte Polykondensate. Die Herstellung dieser Bisimiddicarbonsäuren sowie die Polykondensation mit Diaminen oder Diolen erfolgt stets in Lösung. In einer Reihe von Beispielen wird die Herstellung verschiedener Polyesterimide und Polyamidimide beschrieben. So wird u.a. die Umsetzung der Bisimiddicarbonsäure auf Basis von Pyromellitsäureanhydrid und Caprolactam mit Hexandiol zu einem Polyester oder mit Hexamethylendiamin zu einem Polyamidimid erwähnt. Neben dem Löseverhalten und dem Schmelzpunkt wird lediglich noch die Zersetzungstemperatur angegeben. Pyromellitsäure oder deren Derivate führen insbesondere in der Schmelze zu Vernetzungen und damit zu Formmassen, die nicht mehr thermoplastisch verarbeitbar sind, weshalb in den Beispielen nur in verdünnter Lösung gearbeitet wird. Um die Reaktivität unter diesen Bedingungen zu erhöhen wird das Säurechlorid der auf Pyromellitsäure basierenden Bisimiddicarbonsäure eingesetzt. Da die Pyromellitsäurederivate aufgrund ihrer Struktur stets zwei Imidbindungen ausbilden, reagieren pro Mol Pyromellitsäurederivat immer zwei Mol Lactam, womit die Glasübergangstemperatur durch die hohen Anteile an aliphatischen Struktureinheiten deutlich reduziert wird.

Auch das Verfahren zur Herstellung von Polyimiden gemäss der US 4,161,477 verwendet niedermolekulare Bisimide aus Pyromellitsäure oder Benzophenontetracarbonsäure und Caprolactam als Edukt in der Polykondensation mit aromatischen Diaminen, wie z.B. Diaminodiphenylether. In einer Polyimid-Austauschreaktion bei Temperaturen über 300°C werden die intermediär gebildeten Polyamidimide in die Polyimide überführt, wobei Caprolactam wieder abgespalten wird.

Die US 2011/0160407 A1 offenbart ein Herstellverfahren für semiaromatische Polyamidimide (PAI) auf Basis einer tri- bzw. tetrafunktionellen Carbonsäure, bevorzugt aromatischer Natur, in der Schmelze, wobei das Verfahren praktisch identisch ist mit der PA66-Herstellung. In den Beispielen werden unterschiedlich zusammengesetzte Copolymere aus den Monomeren Hexandiamin, Adipinsäure, Terephthalsäure und Trimellitsäure (TMA) bzw. Pyromellitsäure gearbeitet. Diese Copolymere sind nicht transparent und enthalten keine Lactame oder Aminocarbonsäuren. Darüber hinaus werden Mischungen aus PA66 und dem Polyamidimid 6TMA offenbart. Aufgrund der höheren Glasübergangstemperatur des PAI steigt das Elastizitätsmodul gemessen bei 90°C mit zunehmender PAI-Konzentration der Blends an.

Ein Verfahren zur Herstellung von Phthalimido-N-carbonsäuren durch Umsetzung von substituierten Phthalsäureanhydriden und Lactamen wird in der DE1770416 vorgestellt. Die Umsetzung erfolgt problemlos, wenn elektronenziehende Substituenten an den Phthalsäureanhydriden gebunden sind. Bevorzugte Anhydride sind Trimellitsäureanhydrid (TMA) und Pyromellitsäureanhydrid, bevorzugte Lactame Caprolactam und Laurinlactam. Die Umsetzung erfolgt bei Temperaturen im Bereich von 130 - 250°C in Lösung oder in Substanz. Die Imidodicarbonsäure aus TMA und Caprolactam wird beispielsweise in der Schmelze bei 200°C hergestellt und weist einen Schmelzpunkt im Bereich von 207-210°C auf. Als mögliche Folgereaktion wird die Umsetzung der bifunktionellen Imidocarbonsäuren mit monofunktionellen Alkoholen erwähnt.

In der EP 0 470 464 A2 werden transparente Polyetheresteramidimide sowie ihre Verwendung zur Herstellung von medizinischen Gebrauchsartikeln beschrieben. Ziel ist es, transparente Polymere zu entwickeln, die das elastomere Verhalten von Polyurethanen aufweisen, aber thermisch stabiler sind. Diese Polymere werden hergestellt durch Polykondensation von Bisimidodicarbonsäuren, zugänglich durch Umsetzung von 2 Mol TMA mit 1 Mol eines aliphatischen oder cycloaliphatischen Diamins, sowie Polyetherdiolen, wie z.B. Polytetrahydrofuran, und Butandiol in Gegenwart eines Veresterungskatalysators.

Staubli et. al. stellen in Macromolecules 1991 (24) 2283-2290 Poly(anhyrid-co-imide) vor, die vollständig durch Hydrolyse abgebaut werden können. Ausgangspunkt für die Synthese dieser Copolymere sind wiederum die Imidodicarbonsäuren auf Basis von TMA und Aminocarbonsäuren, die vor der weiteren Umsetzung mit längerkettigen Dicarbonsäureacetanhydriden in die gemischten Anhydride der Essigsäure überführt werden. Die Copolymere weisen relativ geringe mechanische Festigkeiten und tiefe Glasübergangstemperaturen auf.

Aus den Dokumenten EP 0291699 sowie DE 1795752 sind Lackbindemittel auf Basis von hochmolekularen Polyamid-imiden bekannt,

### DARSTELLUNG DER ERFINDUNG

Der Erfindung liegt demnach unter anderem die Aufgabe zugrunde, auf neuen transparenten Polyamidimiden (PAI) basierende thermoplastische Formmassen zur Verfügung zu stellen, welche u.a. sowohl hinsichtlich der mechanischen Eigenschaften auch unter nassen oder feuchten Bedingungen, als auch bezüglich der Wärmeformbeständigkeit im Vergleich zum Stand der Technik verbessert sind. Zudem sollen die Formmassen resp. daraus hergestellte Formteile hohe Zähigkeit, gute Lösungsmittelbeständigkeit bei gleichzeitig hoher Steifheit und Wärmeformbeständigkeit zeigen. Des Weiteren sollen Formteile auf Basis der Polyamidimide bzw. daraus hergestellter Formmassen sowie Verfahren zur Herstellung der Polyamidimide und derartiger Formmassen zur Verfügung gestellt werden.

Somit betrifft die Erfindung thermoplastische Formmassen auf Basis transparenter Polyamidimide (PAI) hergestellt auf Basis von mindestens den folgenden Monomeren:
(A) Cycloaliphatische oder aromatische Tricarbonsäuren, insbesondere mit wenigstens zwei vicinal angeordneten Carboxylgruppen, d.h. ortho- oder 1,2-ständige Carboxylgruppen, oder deren Derivate, wie z.B. Säurechlorid, Ester oder Anhydrid;
(B) Aminocarbonsäuren bzw. Lactame, insbesondere oder namentlich solche mit 6 - 12 C-Atomen;
(C) Cycloaliphatische Diamine mit 6 bis 24 C-Atomen ausgewählt aus einer bestimmten Gruppe gemäss Anspruch 1.

Die vorgeschlagenen Polyamidimide können damit auch noch weitere Bausteine aufweisen, z.B. wie sie unten in den Komponenten (D), (E), oder (F) angegeben sind. Spezifisch betrifft die Erfindung thermoplastische Formmassen auf Basis transparenter Polyamidimide (PAI) nach Anspruch 1, namentlich thermoplastische Formmassen auf Basis transparenter Polyamidimide auf Basis von einer oder mehreren (dann verschiedenen) Imidodicarbonsäuren oder deren Derivaten (Komponenten (A) und (B), nachfolgend u.a. als Dicarbonsäure-Komponente AB bezeichnet) und cycloaliphatischen Diaminen (C) mit 6 bis 24 Kohlenstoffatomen wie beansprucht, wobei die Imidodicarbonsäuren bzw. -derivate ausgewählt sind aus der Gruppe der Imidodicarbonsäuren mit folgenden Strukturformeln: 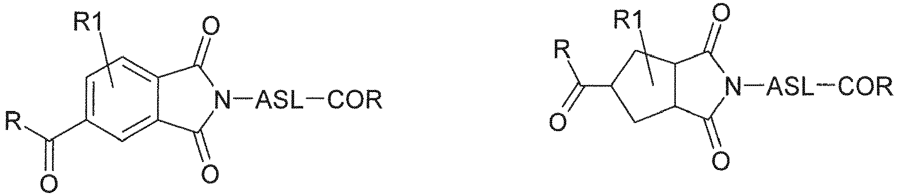 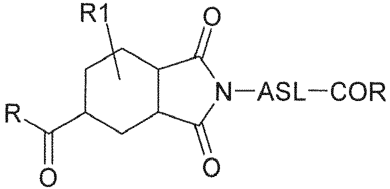 wobei folgende Definitionen gelten:
- ASL=: (CH₂)₅₋₁₁, Phenylen, (Ylomethyl)phenyl, Bis(ylomethyl)benzol, Cyclohexandiyl, (Ylomethyl)cyclohexyl, Bis(ylomethyl)cyclohexan, Cyclopentandiyl, (Ylomethyl) cyclopentyl, Bis(ylomethyl)cyclopentan,
- R =: OH, O-Alkyl, O-Aryl, Cl, NH-ASL-COOH, Br, O-(CO)-Alkyl, O-(CO)-Aryl
- R1 =: H, Methyl, Ethyl, Propyl, mit der Massgabe, dass der Ring ein- oder zweifach substituiert sein kann, und bei doppelter Substitution des Ringes die beiden Substituenten aus der Gruppe ausgewählt und gleich oder verschieden sein können,
dies mit der Maßgabe, dass das transparente Polyamidimid frei von Bausteinen ist, in welchen die genannten cycloaliphatischen Diamine (C) mit wenigstens einer ihrer Aminogruppen das Imido-Element von Imido-Aminocarboxylsäuren, die den genannten Imidodicarbonsäuren (AB) entsprechen indem in diesen die genannten cycloaliphatischen Diamine (C) das darin enthaltene Strukturelement N-ASL-COR ersetzen, bilden,
und mit der Maßgabe, dass das transparente Polyamidimid frei ist von aromatischen Diaminen. Nach der Erfindung wie sie hier beschrieben und beansprucht wird gelten als aromatische Diamine nur aromatische Diamine, bei welchen wenigstens eine, vorzugsweise beide, Amino-Gruppe direkt an das aromatische Strukturelement des entsprechenden Moleküls angebunden ist. Entsprechend sind Diamine wie beispielsweise MXD oder PXD keine aromatischen Diamine im Sinne der vorliegenden Erfindung, weil in diesen Fällen die Aminogruppen an die aliphatische Methylengruppe angebunden sind und nicht direkt an den aromatischen Benzolring.

Nach der IUPAC Nomenklatur bezeichnet "Ylo" als Präfix ein Radikal als Teil des Substituenten und bezeichnet die Elimination eines Wasserstoffatoms (vgl. e.g. G. Kruse, Nomenklatur der Organischen Chemie, VCH, Weinheim, 1997, S. 161).

Nach einer ersten bevorzugten Ausführungsform ist das Polyamidimid der thermoplastischen Formmasse dadurch gekennzeichnet, dass es ausschließlich aufgebaut ist aus einem Disäure-Anteil ausschliesslich aufgebaut aus:
20-100 mol-% von einer oder mehrerer der genannten Imidodicarbonsäuren (AB) oder deren Derivate;
0-80 mol-% wenigstens einer weiteren Disäure (D), welche von den genannten Imidodicarbonsäuren (AB) verschieden ist;
wobei sich die Disäure-Anteile auf 100 mol-% ergänzen,
und einem Diamin-Anteil ausschliesslich aufgebaut aus:
20-100 mol-% wenigstens eines cycloaliphatischen Diamins (C) mit 6-24 Kohlenstoffatomen wie beansprucht;
0-80 mol-% wenigstens eines weiteren, nicht-aromatischen Diamins (E), das verschieden ist vom genannten cycloaliphatischen Diamin,
wobei sich die Diamin-Anteile auf 100% ergänzen.

Nach einem weiteren bevorzugten Ausführungsbeispiel ist das Polyamidimid der thermoplastischen Formmasse ausschließlich aufgebaut aus einer oder mehrerer der genannten Imidodicarbonsäuren (AB) oder deren Derivate und den genannten cycloaliphatischen Diaminen (C) mit 6-24 Kohlenstoffatomen wie beansprucht.

Der Rest R, der in den obigen Strukturformeln einmal links am Ring am C=O Substituenten auftaucht und einmal in den Strukturformeln rechts an der Kette -ASL-COR kann entweder an diesen beiden Positionen gleich ausgewählt sein, oder aber auch verschieden. Dies gilt generell im Zusammenhang mit den obigen Strukturformeln aber auch im Zusammenhang mit den weiteren unten angegebenen bevorzugten Ausführungsformen, in denen der Rest R genannt ist.

Damit ist die Imidodicarbonsäure bzw. deren Derivat gebildet aus der oben genannten Komponente (A), also aus einer ccycloaliphatischen oder aromatischen Tricarbonsäure, wie bevorzugt Trimellitsäure bzw. deren Derivate (erste Struktur), insbesondere aus Trimellitsäureanhydrid sowie Aminosäuren oder Lactamen mit 6 bis 12 Kohlenstoffatomen (Komponente (B)).

Wenigstens eine Imidodicarbonsäure bzw. -derivat, bevorzugt der ganze Anteil an Imidodicarbonsäure bzw. -derivat im Polyamidimid, entspricht bevorzugt folgender Strukturformel: 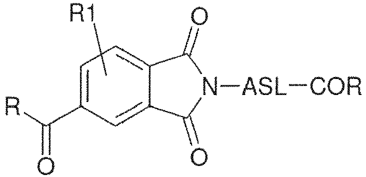 wobei bevorzugtermassen R1 = H, und/oder ASL = (CH₂)₅₋₁₁, und/oder R = OH, NH-ASL-COOH.

Bevorzugt werden als **Komponente (A)** die folgenden cycloaliphatischen oder aromatischen Tricarbonsäuren bzw. deren Derivate, wie z.B. Säurechloride, Ester oder Anhydride eingesetzt: Cyclopentan-1,2,4-tricarbonsäure, 2-Methyl-cyclopentan-1,2,4-tricarbonsäure, 3-Methyl-cyclopentan-1,2,4-tricarbonsäure, 3,5-Dimethyl-cyclopentan-1,2,4-tricarbonsäure, Cyclohexan-1,2,4-tricarbonsäure, 2-Methyl-cyclohexan-1,2,4-tricarbonsäure, 3-Methyl-cyclohexan-1,2,4-tricarbonsäure, 4-Methyl-cyclohexan-1,2,4-tricarbonsäure, 5-Methyl-cyclohexan-1,2,4-tricarbonsäure, 1,2-Dimethyl-cyclohexan-1,2,4-tricarbonsäure, 3,5-Dimethyl-cyclohexan-1,2,4-tricarbonsäure, 2,4-Dimethylcyclohexan-1,2,4-tricarbonsäure, oder Mischungen davon.

Insbesondere bevorzugt werden als Komponente (A) Trimellitsäureanhydrid (TMA) oder Trimellitsäure (TMS) oder Derivate der Trimellitsäure, wie z.B. Chloride, Ester oder gemischte Anhydride, eingesetzt.

Als **Komponente (B)** kommen α,ω-Aminosäuren oder Lactame, insbesondere mit 6 bis 12 Kohlenstoffatomen, zum Einsatz, wobei Aminosäuren oder Lactame ausgewählt aus der Gruppe bestehend aus: m-Aminobenzoesäure, p-Aminobenzoesäure, p-(Aminomethyl)benzoesäure, m-(Aminomethyl)benzoesäure, Aminophenylessigsäure, (Aminomethyl)phenylessigsäure, 3- oder 4-Aminocyclohexancarbonsäure, 3- oder 4-(Aminomethyl)cyclohexancarbonsäure, 3- oder 4-Aminocyclohexanessigsäure, 3- oder 4-(Aminomethyl)cyclohexanessigsäure, 3-Aminocyclopentancarbonsäure, 3-(Aminomethyl)cyclopentancarbonsäure, 3-Aminocyclopentanessigsäure, 3-(Aminomethyl)-cyclopentanessigsäure, Caprolactam (CL), ω-Aminocapronsäure, ω-Aminoheptansäure, ω-Aminoctansäure, ω-Aminononansäure, ω-Aminodecansäure, ω-Aminoundecansäure (AUA), Laurinlactam (LL) und ω-Aminododecansäure (ADA), oder Mischungen davon, bevorzugt werden. Besonderes bevorzugt sind dabei Caprolactam, ω-Aminocapronsäure, Laurinlactam, ω-Aminododecansäure und ω-Aminoundecansäure.

Besonders bevorzugt als **Komponente AB** ist die Imidodicarbonsäure (unsubstituierte) Trimellitimidocapronsäure, (unsubstituierte) Trimellitimidoundecansäure oder (unsubstituierte) Trimellitimidolaurinsäure oder eine Mischung daraus.

Die Erfindung betrifft weiterhin ein Verfahren zur Herstellung einer thermoplastischen Formmasse mit einem Polyamidimid, wie es oben beschrieben ist. Das Verfahren ist dadurch gekennzeichnet, dass, in einem ersten Reaktionsschritt, eine Imidodicarbonsäuren (AB) oder ein Derivat davon, ausgewählt aus der Gruppe der Imidodicarbonsäuren (AB) mit folgenden Strukturformeln: 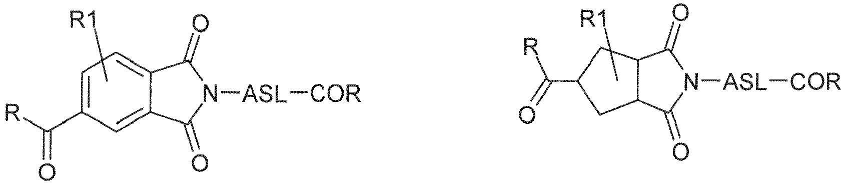 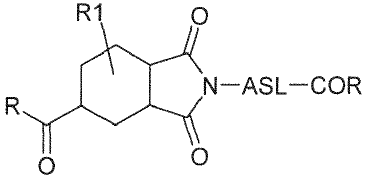 wobei:
ASL = (CH₂)₅₋₁₁, Phenylen, (Ylomethyl)phenyl, Bis(ylomethyl)benzol, Cyclohexandiyl, (Ylomethyl)cyclohexyl, Bis(ylomethyl)cyclohexan, Cyclopentandiyl, (Ylomethyl)cyclopentyl, Bis(ylomethyl)cyclopentan,
R = OH, O-Alkyl, O-Aryl, Cl, NH-ASL-COOH, Br, O-(CO)-Alkyl, O-(CO)-Aryl,
R1 = H, Methyl, Ethyl, Propyl, mit der Massgabe, dass der Ring ein- oder zweifach substituiert sein kann, und bei doppelter Substitution des Ringes die beiden Substituenten aus der Gruppe ausgewählt aber verschieden sein können
aufgebaut wird ausgehend von den entsprechenden cycloaliphatischen oder aromatischen Tricarbonsäuren mit wenigstens zwei vicinalen Carboxylgruppen (A) bzw. deren Derivaten und Aminocarbonsäure oder Lactam (B), und in einem zweiten nachgeschalteten separaten Schritt diese Imidodicarbonsäuren (AB) oder deren Derivate mit cycloaliphatischen Diaminen (C) mit 6 bis 24 Kohlenstoffatomen, sowie ggf. weiteren von der Komponente (AB) verschiedenen Disäuren (D) und/oder weiteren, von der Komponente (C) verschiedenen, vorzugsweise nicht-aromatischen Diaminen (E) zum Polyamidimid reagiert werden.

Bei der Bereitstellung der Imidodicarbonsäure bzw. deren Derivate wird bevorzugt in einem ersten Verfahrensschritt eine Dicarbonsäure-Komponente aus den Monomeren A und B aufgebaut, die nachfolgend mit cycloaliphatischen Diaminen und optional zusätzlich mit weiteren Diaminen, Dicarbonsäuren und Lactamen zu hochmolekularen Polyamidimiden polykondensiert werden. Bei der Dicarbonsäure-Komponente aus den Monomeren A und B handelt es sich um Imidodicarbonsäuren bzw. deren Derivate, welche nachfolgend u.a. als Dicarbonsäure-Komponente AB bezeichnet werden. Schema 1 zeigt die Umsetzung des bevorzugt verwendeten cyclischen Tricarbonsäure-Äquivalents Trimellitsäureanhydrid mit den bevorzugten C6-C12-Lactamen zu den entsprechenden Imidocarbonsäuren.

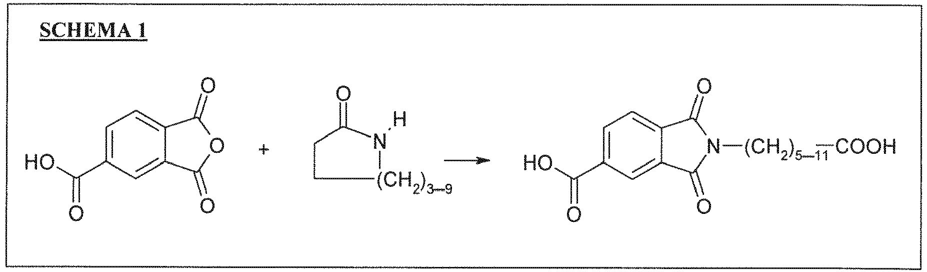

Die Komponenten (A) und (B) werden hierzu vorzugsweise in einem molaren Verhältnis im Bereich von 1:2.5 bis 1:1 eingesetzt. Bevorzugt wird ein molares Verhältnis (A):(B) von 1:2 bis 1:1, insbesondere bevorzugt ein molares Verhältnis von 1:1 oder nahezu 1:1 eingesetzt. Das bedeutet, dass die Monomere (A) und (B) besonders bevorzugt in einem nahezu äquimolaren Verhältnis zueinander eingesetzt werden. Insbesondere die Komponente (AB) enthält keine freie oder nicht-reagierte cycloaliphatische oder aromatische Tricarboxylsäure (A) oder Derivate davon. Weiterhin ist es bevorzugt, dass die Komponente (AB) weniger als 10 Gewichtsprozent, vorzugsweise weniger als 5 Gewichtsprozent nicht-reagierte Lactame oder Aminocarboxylsäuren (B) enthält. Der Ausschluss von freien oder nicht-reagierten Komponenten (A) aus der Kondensationsreaktion verhindert die Bildung einer Imid-Struktur (AC) und insbesondere die Ausbildung von bis-Imid-Strukturen (ACA) durch die Reaktion von cycloaliphatischer oder aromatischer Tricarboxylsäure (A) oder Derivaten davon mit dem cycloaliphatischen Diamin.

In zweiten Schritt des bevorzugten Herstellverfahrens wird die so hergestellte Dicarbonsäure-Komponente AB mit mindestens einem cycloaliphatischen Diamin, bevorzugt einem cycloaliphatischen Diamin mit 6 bis 24 und besonders bevorzugt mit einem cycloaliphatischen Diamin mit 12 bis 18 Kohlenstoffatomen zum Polyamidimid umgesetzt. Diese Synthesestufe wird beispielhaft in Schema 2 dargestellt, wiederum für die Situation, dass die Imidodicarbonsäure auf Basis von Trimellitsäureanhydrid mit den bevorzugten C6-C12-Lactamen erhalten wurde, das Schema ist aber wie schon Schema 1 und die weiteren Schemata analog auch auf andere Ausgangssysteme, die von Anspruch 1 umfasst sind, anwendbar.

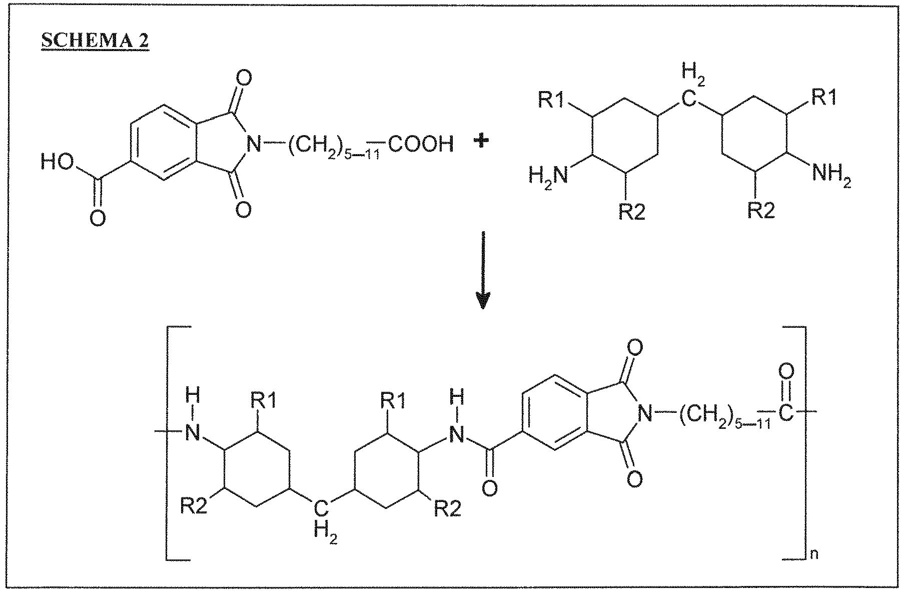

Nach der Erfindung werden Polyamidimide der thermoplastischen Formmasse auf Basis der cycloaliphatischen Diamine als **Komponente (C)** ausgewählt aus der folgenden Gruppe: Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethy-cyclohexyl)-methan (TMDC), 2,6-Bis-(aminomethyl)-norbornan, 1,3-Bis-(aminomethyl)cyclohexan, 1,4-Bis-(aminomethyl)cyclohexan, 2,2-(4,4'-Diaminodicyclohexyl)propan (PACP) sowie Mischungen davon. In einer besonders bevorzugten Ausführungsform wird das Bis-(4-amino-3-methyl-cyclohexyl)-methan (MACM) eingesetzt. Erfindungsgemäss können auch Mischungen aus 2 oder 3 verschiedenen cycloaliphatischen Diaminen eingesetzt werden.

In einer weiteren bevorzugten Ausführungsform umfasst die vorliegende Erfindung auch Copolymere, die neben dem Imid-Amid-System CAB mindestens ein weiteres Amidsystem, d.h. wenigstens eine weitere von der Komponente AB verschiedene Disäure (D), z.B. in Form eines Systems CD, enthalten, wobei es sich bei **Komponente (D)** um eine aliphatische, cycloaliphatische oder aromatische Dicarbonsäure handelt. In Schema 3 ist beispielhaft ein solches bevorzugtes Copolyamidimid auf Basis eines Amid-Imid-Systems aus Trimellitsäureanhydrid, Laurinlactam und MACM sowie einem zusätzlichen Amid-System aus MACM und Isophthalsäure (als Komponente D) dargestellt. Dabei nehmen die Indizes n und m Werte zwischen 20 und 80 mol-% an und ergänzen sich zusammen zu 100 mol-%.

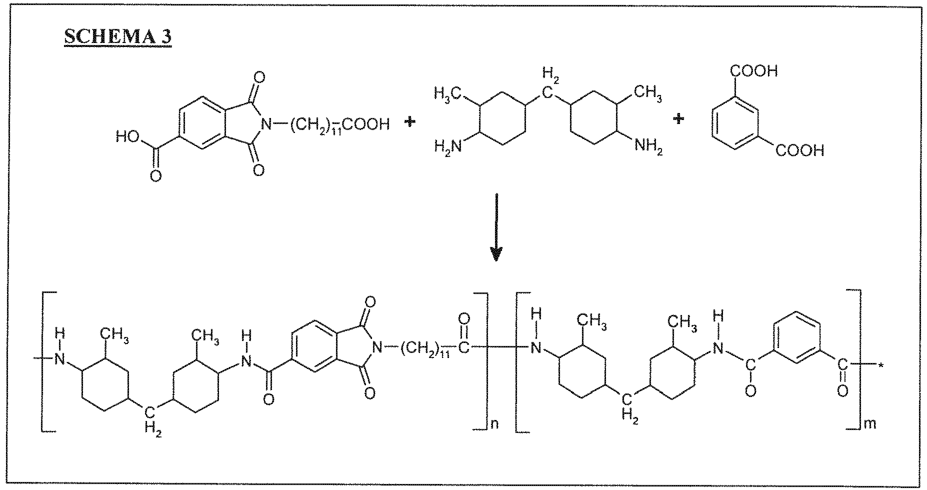

Derartige Copolyamidimide auf Basis der Dicarbonsäure-Komponente AB, cycloaliphatischen Diaminen (C) sowie einer weiteren Dicarbonsäure (Komponente D), setzen sich bevorzugt zu 80 bis 20 mol-%, insbesondere zu 70 bis 30 mol-% aus der Polyamidimideinheit CAB und zu 20 bis 80 mol-%, insbesondere zu 30-70 mol-% aus der Polyamideinheit CD zusammen. D.h. die Dicarbonsäure-Komponente AB wird in solchen Copolyamidimiden bis zu 80 mol-% durch eine andere Dicarbonsäure ersetzt, wobei die Summe aller Dicarbonsäuren zusammen 100 mol-% ergibt.

Als weitere Disäure, d.h. als Komponente D, werden bevorzugt bifunktionelle, aliphatische, cycloaliphatische oder aromatische Carbonsäuren (Dicarbonsäuren), bevorzugt mit 2 bis 36 Kohlenstoffatomen, besonderes bevorzugt mit 6-18 Kohlenstoffatomen, eingesetzt. Dicarbonsäuren der Komponente D, die in Kombination mit den obligaten Imidodicarbonsäuren (Dicarbonsäure-Komponente AB) verwendet werden, sind u.a. Adipinsäure, Korksäure, Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Terephthalsäure, Naphthalindicarbonsäure, cis- und/oder trans-Cyclohexan-1,4-dicarbonsäure und/oder cis- und/oder trans-Cyolohexan-l,3-dicarbonsäure (CHDA) und Gemischen daraus.

Eine weitere Ausführungsform umfasst Copolymere, die neben dem Imid-Amid-System CAB mindestens ein weiteres Amid-Imid-System EAB enthalten, d.h. auf Basis eines weiteren, von der Komponente (C) verschiedenen Diamins als **Komponente (E)** aufgebaut sind, wobei es sich bei Komponente (E) vorzugsweise um ein lineares oder verzweigtes aliphatisches Diamin handelt. In Schema 4 ist beispielhaft ein solches bevorzugtes Copolyamidimid mit dem zusätzlichen Amid-Imid-System aus Hexamethylendiamin (Komponente E) und der Dicarbonsäure-Komponente AB, gebildet aus Trimellitsäureanhydrid und Laurinlactam dargestellt.

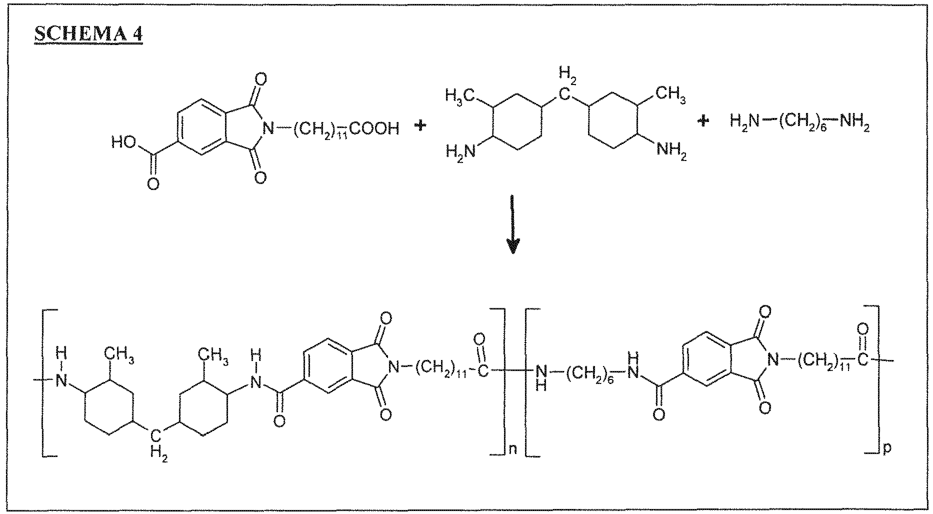

Derartige Copolyamidimide auf Basis der Dicarbonsäure-Komponente AB, cycloaliphatischen Diaminen (C) sowie einem weiteren Diamin (Komponente E), setzen sich bevorzugt zu 80 bis 20 mol-%, insbesondere zu 70 bis 30 mol-% aus der Polyamidimideinheit CAB und zu 20 bis 80 mol-%, insbesondere zu 30-70 mol-% aus der Polyamideinheit EAB zusammen.

Komponente E ist vorzugsweise ein lineares oder verzweigtes aliphatisches Diamin, bevorzugt mit 4 bis 18 Kohlenstoffatomen, besonders bevorzugt mit 6 bis 14 Kohlenstoffatomen. Diamine der Komponente E, die stets in Kombination mit den obligatorischen Diaminen der Komponente C verwendet werden, sind u.a. 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, 1,15-Pentadecandiamin, 1,16-Hexadecandiamin, 1,17-Heptadecandiamin, 1,18-Octadecandiamin, meta-Xylylendiamin und para-Xylylendiamin oder Mischungen davon.

Ebenfalls können die Polyamidimide auf Basis weiterer, von den Aminosäuren/Lactamen (B) verschiedener Aminosäuren/Lactame aufgebaut sein. Vorzugsweise ist aber der Anteil solcher weiterer, von den Aminosäuren/Lactamen (B) verschiedener Aminosäuren/Lactame im Wesentlichen null.

Spezifische bevorzugte Ausführungsformen enthalten also neben dem Amid-Imid-System CAB zusätzliche Amid-Imid- bzw. Amid-Systeme, die durch teilweisen Ersatz der Amid-Imid-Systems CAB durch EAB bzw. CD entstehen. Ein zusätzliches Amid-Imid-System bildet sich bei Zusatz eines weiteren Diamins aus, also einem teilweisen Ersatz des cycloaliphatischen Diamins (Komponente C) durch ein Diamin der Komponente E, während ein zusätzliches Amid-System durch teilweisen Ersatz der Dicarbonsäure-Komponente AB durch eine andere Dicarbonsäure (Komponente D) entsteht. Auch gemischte Formen sind möglich, in welchen Gruppen CAB zusammen mit Gruppen des Typs EAB und CD, und damit dann ggf. auch mit ED in Kombination, vorliegen.

Als Polykondensationskatalysatoren können den Monomermischungen 0.005 bis 1.5 Gew.-% Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z.B. Na, K, Mg, Ga, Zn oder A1 und/oder deren Ester wie z.B. Triphenylphosphat, Triphenylphosphit oder Tris-(nonylphenyl)-phosphit zugesetzt werden. Bevorzugt sind hypophosphorige Säure und Natriumhydrogen-hypophosphit Monohydrat in einer Menge von 100 bis 500 ppm Phosphor bezogen auf die gesamte Monomereinwaage.

Zur Reglung der Molmasse, der relativen Viskosität bzw. der Fliessfähigkeit oder des MVR können dem Ansatz Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, u.a. Die Regler können einzeln oder in Kombination benutzt werden. Es können auch andere monofunktionelle Verbindungen als Regler eingesetzt werden, die mit einer Amino- oder Säuregruppe reagieren können wie Anhydride, Isocyanate, Säurehalogenide oder Ester. Als ein spezieller Regler der zusammen mit Aminoendgruppen zur Ausbildung einer Imidbindung befähigt ist, sei Phthalsäure genannt. Die übliche Einsatzmenge der Regler liegt zwischen 10 und 200 mmol pro kg Polymer.

Der Brechungsindex der Polyamidimide ist bevorzugtermassen grösser oder gleich 1.53, die Abbe Zahl grösser oder gleich 25, die Dichte kleiner oder gleich 1.3 g/cm³. Bevorzugtermassen beträgt die Lösungsviskosität oder relative Viskosität ηᵣₑₗ (nach DIN EN ISO 1628-1) zwischen 1.3 und 2.0, insbesondere zwischen 1.40 und 1.9. Weiterhin liegt der Glasübergangspunkt T_{g} des transparenten PAI bevorzugt oberhalb von 100°C, bevorzugt oberhalb von 120°C, insbesondere bevorzugt oberhalb von 140°C.

Die Lichttransmission von Formteilen mit einer Dicke von 2 mm beträgt wenigstens 80%, bevorzugt wenigstens 85% und besonders bevorzugt wenigstens 88%. Dabei ist der Haze höchstens 5%, bevorzugt höchstens 4% und besonders bevorzugt höchstens 3%. Diese optischen Werte bestimmen sich bei 23°C mit einem Haze-Gard Plus der Firma Byk-Gardener nach ASTM D-1003 (Lichtart C) an Platten 60x60x2 mm.

Die Erfindung umfasst damit thermoplastische Formmassen auf Basis der genannten transparenten Polyamidimide. Vorliegend wird spezifisch entsprechend eine thermoplastische Polyamid-Formmasse mit folgender Zusammensetzung vorgeschlagen:

| | |
|---|---|
| (F1) | 30 - 100 Gew.-% wenigstens eines zuvor beschriebenen Polyamidimids bzw. Copolyamidimids |
| (F2) | 0 - 70 Gew.-% Verstärkungs-und/oder Füllstoffe |
| (F3) | 0 - 50 Gew.-% Additive und/oder weitere Polymere, |

wobei die Komponenten F1 bis F3 zusammen 100% ergeben.

Bei den weiteren Polymeren der Komponente (F3) kann es sich um Homo- und/oder Copolymere handeln, es kann sich um Polyamide aber auch um andere Polymere wie Polyester, Polycarbonate etc. handeln, oder um Mischungen davon. Bevorzugt werden Homo- und/oder Copolyamide.

Die thermoplastischen Formmassen können mit bis zu 70 Gew.-%, bevorzugt 10-70 Gew.-%, besonders bevorzugt mit 20-60 Gew.-%, Füll- und Verstärkungsstoffen (Komponente F2) modifiziert werden, wobei dem Fachmann bekannte Füll- und Verstärkungsstoffe eingesetzt werden können.

Als Verstärkungsmittel werden Glasfasern, Kohlenstofffasern (Carbonfasern, Graphitfasern), Metall- oder Kunststofffasern bevorzugt. Die Verstärkung kann mit Kurzfasern, wie z.B. mit Schnittglas von 2 - 12 mm Länge, oder Endlosfasern (Roving) erfolgen. Besonders bevorzugt werden Glasfasern, wobei die Glasfasern kreisförmigen oder nicht-kreisförmigen Querschnitt aufweisen können. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 2 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf.

Die erfindungsgemässen flachen Glasfasern mit nicht-kreisförmiger Querschnittsfläche werden bevorzugt als Kurzglasfaser (Schnittglas mit einer Länge von 0.2 bis 20 mm, bevorzugt 2 - 12 mm) eingesetzt. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern wie oben definiert bevorzugtermassen überwiegt, d.h. mehr als 50 Gew.-% der Gesamtmasse der Fasern ausmacht. Die runden Glasfasern, die eine kreisförmige Querschnittsfläche aufweisen, haben einen Durchmesser von 6 - 20 µm, bevorzugt 6-13 µm, insbesondere bevorzugt von 6-10 µm. Als Verstärkung kommen weiterhin auch Kombinationen der Glasfasern (im Querschnitt kreisförmige und/oder nicht-kreisförmige Glasfasern) mit Kohlenstofffasern und/oder synthetischen Fasern, wie z.B. Aramidfasern, und/oder Basaltfasern infrage.

Die erfindungsgemäss als Roving (Füllstoffkomponente B) eingesetzten Glasfasern weisen einen Durchmesser von 10 bis 20 µm, bevorzugt von 12 bis 18 µm auf, wobei der Querschnitt der Glasfasern rund, oval, elliptisch, elliptisch mit Einschnürung(en), polygonal, rechteckig oder nahezu rechteckig sein kann. Besonders bevorzugt werden sogenannte flache Glasfasern mit einem Verhältnis der Querschnittsachsen von 2 bis 5. Alle zuvor beschriebenen Glasfasern können dabei ausgewählt sein aus der Gruppe aus E-Glasfasern, A-Glasfasern, C-Glasfasern, D-Glasfasern, M-Glasfasern, S-Glasfasern und/oder R-Glasfasern, wobei E-Glasfasern bevorzugt sind. Weiterhin können die Glasfasern für sich gesehen, d.h. bei runden, flachen oder eckigen Fasern mit Abmessungsverhältnis von der Hauptquerschnittsachse zur Nebenquerschnittsachse von mehr als 2, auch mit einer Amino- oder Epoxysilanbeschichtung versehen sein.

Die mit geschnittenen Fasern verstärkten Polyamidimidformmassen können durch bekannte Compoundierverfahren hergestellt werden, bei denen die geschnittenen Fasern, insbesondere Schnittglas zusammen mit den übrigen Komponenten der Formmasse in den Einzug dosiert werden. Alternativ können die geschnittenen Fasern aber auch separat mittels aktiver Förderung in Gehäuse eines Extruders, die näher am Austrag liegen, in die Polymerschmelze eingetragen werden.

Die mit endlosen Fasern verstärkten Polyamidimidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschliessend abgekühlt und geschnitten wird.

Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden, wobei besonders gute Eigenschaften des Formteils mit schonenden Verarbeitungsverfahren erreicht werden. Die beim Pultrusionsverfahren eingesetzten Endlos-Kohlenstofffasern weisen einen Durchmesser von 5 bis 10 µm, bevorzugt 6 bis 8 µm auf. Die Endlos-Kohlenstofffasern können allein oder in Kombination mit Endlos-Glasfasern (kreisförmiger und/oder nicht-kreisförmiger Querschnitt) eingesetzt werden.

Als weitere Komponente können die thermoplastischen Formmassen vorzugsweise einen teilchenförmigen Füllstoff oder eine Mischung aus zwei oder mehr unterschiedlichen Füllstoffen auch in Kombination mit Verstärkungsstoffen enthalten. Beispielsweise kommen mineralische teilchenförmige Füllstoffe auf Basis von Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen in Frage. Die Füllstoffe können auch oberflächenbehandelt sein. Darüber hinaus können die Formmassen Stabilisatoren, Verarbeitungshilfsmittel und Schlagzähmodifikatoren sowie weitere Additive in einer Konzentration bis 50 Gew.-% enthalten (Komponente F3). In einer weiteren Ausführungsform enthält die erfindungsgemässe Formmasse bis zu 45 Gew.-% eines oder mehrerer Schlagzähmodifikatoren (SZM). Bevorzugt wird eine SZM-Konzentration im Bereich zwischen 5 und 30 Gew.-%.

Bei den oben erwähnten, optional vorhandenen Additiven (Komponente F3) kann es sich u.a. um anorganischen Stabilisatoren, organischen Stabilisatoren, wie z.B. UV-Stabilisatoren, Hitzestabilisatoren, Radikalfänger und/oder um Verarbeitungshilfsstoffe, Nukleierungsmittel, Weichmacher, Gleitmittel, Farbstoffe, metallischen Pigmente, Metallflitter, metallbeschichtete Partikel, halogenhaltigen Flammschutzmittel, halogenfreien Flammschutzmittel, Schlagzähmodifikatoren, Antistatika, Leitfähigkeitsadditive, Entformungsmittel, optischen Aufheller, natürlichen Schichtsilikate, synthetischen Schichtsilikate oder weitere Polymere oder um Kombinationen oder Mischungen davon handeln. Des Weiteren können die Formmassen nanoskalige Füll- und/oder Funktionsstoffe, wie zum Beispiel Schichtmineralien oder Metalloxide, die den Brechungsindex erhöhen, beinhalten. Als Antistatika können in den erfindungsgemäßen Formmassen z. B. Ruß und/oder Kohlenstoffnanoröhrchen, Graphit oder Metallpartikel- bzw. -fasern eingesetzt werden. Als Schichtsilikate können in den erfindungsgemäßen Formmassen, z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt, aber auch unbehandelt sein. Als Stabilisatoren bzw. Alterungsschutzmittel können in den erfindungsgemäßen Formmassen, z.B. Antioxidantien, Antiozonantien, Lichtschutzmittel, UV-Stabilisatoren, UV-Absorber oder UV-Blocker eingesetzt werden.

Weiterhin betrifft die Erfindung einen trübungsarmen Gegenstand mit wenigstens einem Bereich oder einer Schicht aus der erfindungsgemässen Polyamidimidformmasse, wie sie oben angegeben wurde. Bevorzugtermassen handelt es sich dabei um eine Folie, ein Einlegeteil, ein Profil, ein Rohr, einen Hohlkörper oder einen optisch variablen Filter oder besonders bevorzugt eine optische Linse handelt, insbesondere bevorzugt um eine ophthalmische Linse. Dabei beträgt die Lichttransmission im Sinne der Erfindung wenigstens 80%, bevorzugt wenigstens 85% und besonders bevorzugt wenigstens 88%. Der Wert der Lichttransmission ist dabei, wie bereits oben erwähnt, im Rahmen dieses Textes stets als bestimmt nach der Methode ASTM D1003 (Lichtart CIE-C) zu verstehen. Die Messung der Lichttransmission wurde dabei in den unten angeführten Experimenten auf einem Gerät mit dem Namen Haze Guard Plus der Firma BYK Gardner (DE) an Platten 60x60x2 mm durchgeführt. Der Transmissionswert wird für den sichtbaren Wellenlängenbereich definiert nach CIE-C d.h. mit wesentlichen Intensitäten ca. zwischen 400 und 770 nm, angegeben. Die Platten 60x60x2 mm werden z.B. dafür auf einer Arburg Spritzgussmaschine im polierten Werkzeug hergestellt, wobei die Zylindertemperatur zwischen 200 und 340 °C und die Werkzeugtemperatur zwischen 20 und 140 °C liegt. Insbesondere für hochwertige optische Anwendungen, wie beispielsweise als Linsen, erweist es sich als vorteilhaft, wenn ein Gegenstand aus der Polyamidimidformmasse einen Glasübergangspunkt oberhalb von 100°C, bevorzugt oberhalb von 120°C, insbesondere bevorzugt oberhalb von 140°C, aufweist.

Die Erfindung betrifft letztlich damit auch die Verwendung der zuvor beschriebenen Formmassen zur Herstellung von Formkörpern. Hierbei sind die Formkörper vorzugsweise ausgewählt aus der Gruppe bestehend aus passgenauen Teilen, aufeinander beweglichen Teilen, Funktionselementen, Bedienungselementen, Nachführelementen, Justierelementen, Tragelementen, Rahmenelementen, Schaltern und Gehäusen im Bereich Elektro, Elektronik, Energie- und Antriebstechnik, Maschinenbau, Automobil, Möbel, Sport, Sanitär, Hygiene, Medizintechnik, Transportmittel, Telekommunikation, Unterhaltungselektronik, Haushaltsapparate oder elektrisches Werkzeug, hergestellt durch Spritzguss, Extrusion oder andere Verformungstechniken, z.B. Funktionsträger im Cockpitbereich eines Automobils, Rahmenbauteile einer Nähmaschine, Handygehäuse, Gehäuse oder Rahmenteile von Laptops oder Notebooks. Die vorgeschlagene Polyamidimidformmasse kann darüber hinaus Verwendung finden beispielsweise als Bestandteil oder Beschichtung von Elementen mit spektraler Filterwirkung wie beispielsweise als Brillenglas, Sonnenlinse, Korrekturlinse, optischer Filter und als Schaltaggregat zur optischen Signalverarbeitung, Skibrille, Visier, Schutzbrille, Fotorecording, Display, optischer Datenspeicher, Fenster von Gebäuden und Fahrzeugen etc. Andererseits auch im Zusammenhang mit Dekorationselementen oder Strukturelementen wie beispielsweise als Brillenfassung, Spielzeug, Abdeckung, insbesondere als Mobiltelefongehäuse, Teil von elektronischen Geräten, Beschichtung insbesondere von Verpackungen, Dekorationsartikeln, Sportgeräten, Verkleidungen bevorzugt im Automobilbereich.

Weitere Ausführungsformen sind in den abhängigen Ansprüchen angegeben.

### BESCHREIBUNG BEVORZUGTER AUSFÜHRUNGSFORMEN

In der Folge sollen spezifische Beispiele (B) angegeben, und mit Vergleichsbeispielen (VB) verglichen und diskutiert werden. Die Beispiele dienen der Stützung der Durchführbarkeit der Erfindung und dem Nachweis der erfinderischen Tätigkeit, sollen aber nicht einschränkend für die allgemeiner in den Ansprüchen formulierte Erfindung ausgelegt werden.
Die Messungen wurden nach folgenden Normen und an folgenden Prüfkörpern durchgeführt.
Der Zug-E-Modul wurde nach ISO 527 mit einer Zuggeschwindigkeit von 1 mm/min, die Streckspannung, die Reissfestigkeit und die Reissdehnung wurden bestimmt gemäss ISO 527 mit einer Zuggeschwindigkeit von 50 mm/min (unverstärkte Varianten) oder einer Zuggeschwindigkeit von 5 mm/min (verstärkte Varianten) bei einer Temperatur von 23 °C, wobei als Probekörper ein ISO-Zugstab , Norm: ISO/CD 3167, Typ A1, 170 x 20/10 x 4 mm, verwendet wurde.
Schlagzähigkeit und Kerbschlagzähigkeit nach Charpy wurden nach ISO 179 am ISO-Prüfstab, Norm: ISO/CD 3167, Typ B1, 80 x 10 x 4 mm bei Temperatur 23 °C gemessen. Das thermische Verhalten (Glasumwandlungstemperatur (Tg)) wurde anhand der ISO-Norm 11357-11-2 am Granulat bestimmt. Die Differential Scanning Calorimetry (DSC) wurde mit Aufheizrate von 20 °C/min durchgeführt. Für die Glasumwandlungstemperatur (Tg) wird die Temperatur für die Mittelstufe bzw. den Wendepunkt angegeben.
Die relative Viskosität (ηᵣₑₗ) wurde gemäss DIN EN ISO 307 anhand von 0,5 Gew.-%-igen m-Kresollösungen bei 20 °C gemessen. Als Probe wird Granulat verwendet.
Die Wärmeformbeständigkeit HDT A (1,8 MPa) wurde gemäss ISO 75 an ISO-Schlagstäben mit der Dimension 80x10x4 mm bestimmt.
Der Haze und die Transmission wurden bei 23°C mit einem Haze-Gard Plus der Firma Byk-Gardener nach ASTM D-1003 (Lichtart C) an Platten 60x60x2 mm bestimmt.

Der Brechungsindex sowie die Abbe-Zahl wurden an Farbplättchen 50x30x3 mm auf einem Abbe Refraktometer von Zeiss mit Tageslicht bestimmt. Die Brechungsindexes verstehen sich als n_{D}²⁰-Werte. Die Abbe-Zahl wird mit Hilfe eines Nomogramm zur Bestimmung der mittleren Dispersion und den mit dem Abbe-Refraktometer bestimmten Werten für K und den Brechungsindex n_{D}²⁰ bestimmt.
Die Wasseraufnahme wurde an Zugstäben nach 96 Stunden Lagerung bei 95°C in Wasser bestimmt.
Die Glanzmessung (Glanz 60°) erfolgte nach ISO 2813 mit einem Glanzmessgerät Multi Gloss 268 von Minolta unter einem Winkel von 60°.
Die Spannungsrissbeständigkeit wurde gemäss DIN 53449, Teil 3 "Biegestreifenverfahren" an einem ISO-Zugstab , Norm: ISO/CD 3167, Typ A1, 170 x 20/10 x 4 mm bei 23 °C bestimmt. Die Randfaserdehnung (%) bei der nach 60 sekündigem Eintauchen in das Medium Risse mit blossem Auge sichtbar sind, wird durch Multiplikation mit dem Zug-E-Modul (trocken, MPa) des vermessenen Materials in eine Spannung, die in der Tabelle angegeben ist, umgerechnet.

### Beispiele B1 bis B7

Lactam bzw. Aminocarbonsäure und Trimellitsäureanhydrid sowie Stabilisatoren und Wasser werden in einen 201-Autoklaven gegeben und auf eine Produkttemperatur von 290 °C (260°C im Fall von Aminocarbonsäuren) aufgeheizt. Nach 3.5 Stunden unter Rühren wird die Druckphase beendet indem der Autoklav auf Normaldruck entspannt wird. Anschliessend wird die Produkttemperatur auf 260°C gesenkt und die Schmelze unter Stickstoffatmosphäre für 1.5 Stunden gerührt. Danach werden die Diamine sowie gegebenenfalls weitere Dicarbonsäuren zudosiert. Es wird unter Stickstoff gerührt bis das vorgegebene Drehmoment erreicht wird. Dann wird die Polymerschmelze über eine Düse ausgetragen, im Wasserbad gekühlt und granuliert. Das Polykondensat wird 24 Stunden bei 80°C und einem Vakuum von 30 mbar getrocknet.

### Beispiele B8 bis B10 sowie VB3 und VB4:

Das zuvor hergestellte Polyamidimid aus den Beispielen B1 und B2 sowie Grilamid TR90 wird in einem zweiwelligen Extruder der Firma Werner und Pfleiderer mit einem Schneckendurchmesser von 25 mm bei vorgegebenen Prozessparametern (Zylindertemperatur: 100 - 280°C; Schneckendrehzahl: 200 Upm; Durchsatz: 10 kg/h) mit den in Tabelle 3 angegebenen Komponenten compoundiert. Das Produkt wird als Strang aus einer Düse mit 3 mm Durchmesser abgezogen und nach Wasserkühlung granuliert. Das Granulat wird 24 Stunden bei 80°C im Vakuum von 30 mbar getrocknet.

### Verarbeitung:

Die Polyamidimide aus B1 bis B7, die Polyamide in VB1 und VB2 sowie die Compounds aus B8 bis B10 sowie VB3 und VB4 werden mit einer Spritzgussmaschine Arburg Allrounder 320-210-750 zu Probekörpern bei Zylindertemperaturen von 240 bis 280°C (Zone 1 bis 4) und einer Werkzeugtemperatur von 80°C verspritzt.

**Tabelle 1: Zusammensetzung und Eigenschaften der Beispiele B1 bis B5**

| | **Einheit** | **B1** | **B2** | **B3** | **B4** | **B5** |
|---|---|---|---|---|---|---|
| Mol-Verhältnis A:B:C | - | 1:1:1 | 1:1:1 | 1:2:1 | 1:1:1 | 1:2:1 |
| TMA | Gew.-% | 31.71 | 31.50 | 23.86 | 30.41 | 23.06 |
| Laurinlactam | Gew.-% | 32.57 | | | | |
| Aminododecansäure | Gew.-% | | | | | |
| Aminoundecansäure | Gew.-% | | 33.01 | 50.01 | 31.86 | 48.32 |
| Stearylamin | Gew.-% | 1.00 | 1.00 | | | |
| PACM | Gew.-% | 34.72 | 34.49 | 26.13 | | |
| MACM | Gew.-% | | | | 37.73 | 28.62 |

| ***Eigenschaften*** | | | | | | |
|---|---|---|---|---|---|---|
| Lösungsviskosität (ηᵣₑₗ) | - | 1.58 | 1.57 | 1.63 | 1.53 | 1.74 |
| Zug-E-Modul | MPa | 1950 | 2050 | 1770 | 2030 | 1840 |
| Streckspannung | MPa | 68 | 71 | 59 | 77 | 64 |
| Reissfestigkeit | MPa | 47 | 57 | 45 | 62 | 46 |
| Reissdehnung | % | 70 | 80 | 110 | 80 | 100 |
| Schlagzähigkeit 23°C | kJ/m² | o.B. | o.B. | o.B. | o.B. | o.B. |
| Schlagzähigkeit -30°C | kJ/m² | o.B. | o.B. | o.B. | o.B. | o.B. |
| Kerbschlagzähigkeit 23°C | kJ/m² | 13 | 12 | 12 | 11 | 11 |
| Kerbschlagzähigkeit -30°C | kJ/m² | 13 | 10 | 13 | 10 | 10 |
| Glasübergangstemperatur | °C | 140 | 145 | 105 | 159 | 120 |
| Wasseraufnahme | % | 2.4 | 2.6 | 2.7 | 2.3 | 2.7 |
| Transmission | % | 88 | 90 | 90 | 90 | 90 |
| Haze | % | 3.2 | 1.4 | 2.5 | 1.5 | 3.1 |
| Glanz 60° | | 143 | 146 | 136 | 145 | 120 |
| Abbe Zahl | | 34 | 33 | 30 | 35 | 40 |
| Brechungsindex | | 1.5491 | 1.5551 | 1.5387 | 1.5523 | 1.5363 |

| *Spannungsrissbeständigkeit* | | | | | | |
|---|---|---|---|---|---|---|
| Methanol | MPa | 58 | 59 | n.b. | 60 | n.b. |
| Ethanol | MPa | 79 | 80 | n.b. | 80 | n.b. |

| | | | | | | |
|---|---|---|---|---|---|---|
| n.b.: nicht bestimmt o.B.: ohne Bruch | | | | | | |

**Tabelle 2: Zusammensetzung und Eigenschaften der Beispiele B6 und B7 sowie der Vergleichsbespiele VB1 und VB2**

| | Einheit | **B6** | **B7** | **VB1** | **VB2** |
|---|---|---|---|---|---|
| Mol-Verhältnis | - | A:B:D:C = 0.7:0.7:0.3:1 | A:B:C = 1:1:1 | | |
| TMA | Gew.-% | 23.98 | 29.29 | Grilamid TR90 | Grilamid TR55 |
| Laurinlactam | Gew.-% | 24.63 | 30.08 | | |
| Aminododecansäure | Gew.-% | | | | |
| Aminoundecansäure | Gew.-% | | | | |
| Isophthalsäure | Gew.-% | 8.89 | | | |
| TMDC | Gew.-% | | 40.63 | | |
| MACM | Gew.-% | 42.51 | | | |
| ***Eigenschaften*** | | | | | |
| Lösungsviskosität (ηᵣₑₗ) | - | 1.53 | 1.50 | 1.78 | 1.75 |
| Zug-E-Modul | MPa | 2250 | 2130 | 1600 | 2200 |
| Streckspannung | MPa | 72 | 58 | 60 | 75 |
| Reissfestigkeit | MPa | 70 | 55 | 45 | 50 |
| Reissdehnung | % | > 50 | > 50 | > 50 | >50 |
| Schlagzähigkeit 23°C | kJ/m² | o.B. | o.B. | o.B. | o.B. |
| Schlagzähigkeit -30°C | kJ/m² | o.B. | o.B. | o.B. | o.B. |
| Kerbschlagzähigkeit 23°C | kJ/m² | 11 | 12 | 13 | 8 |
| Kerbschlagzähigkeit -30°C | kJ/m² | 10 | 10 | 12 | 7 |
| Glasübergangstemperatur | °C | 173 | 166 | 155 | 160 |
| Formbeständigkeit HDT/A | °C | 140 | 135 | 115 | 130 |
| Wasseraufnahme | % | 2.6 | 2.4 | 2.6 | 2.2 |
| Transmission | % | 90 | 90 | 93 | 90 |
| Haze | % | 2.2 | 1.8 | 1 | 1 |
| *Spannungsrissbeständigkeit* | | | | | |
| Methanol | MPa | n.b. | 60 | 60 | 0 |
| Ethanol | MPa | n.b. | 85 | 60 | 0 |

| | | | | | |
|---|---|---|---|---|---|
| n.b.: nicht bestimmt o.B.: ohne Bruch | | | | | |

**Tabelle 3: Zusammensetzung und Eigenschaften der Beispiele B8 bis B10 sowie der Vergleichsbespiele VB3 und VB4**

| | Einheit | **B8** | **VB3** | **B9** | **B10** | **VB4** |
|---|---|---|---|---|---|---|
| PAIB1 | Gew.-% | | | 30.5 | | |
| PAIB2 | Gew.-% | 79.65 | | | 30.5 | |
| Grilamid TR90 | Gew.-% | | 79.65 | | | 30.5 |
| Glasfaser 10 µm | Gew.-% | 20.0 | 20.0 | | | |
| Glasfaser 6 µm | Gew.-% | | | 53.0 | 53.0 | 53.0 |
| Grilamid L20 | Gew.-% | | | 12.5 | 12.5 | 12.5 |
| Irganox 1098 | Gew.-% | 0.25 | 0.25 | 0.25 | 0.25 | 0.25 |
| Hostanox PAR24 | Gew.-% | 0.1 | 0.1 | 0.1 | 0.1 | 0.1 |
| Weisspigment | Gew.-% | | | 3.65 | 3.65 | 3.65 |
| ***Eigenschaften*** | | | | | | |
| Zug-E-Modul | MPa | 5900 | 5100 | 16100 | 16000 | 14300 |
| Streckspannung | MPa | 119 | 106 | 179 | 183 | 169 |
| Reissfestigkeit | MPa | 118 | 106 | 179 | 183 | 169 |
| Reissdehnung | % | 4.1 | 4.0 | 2.2 | 2.2 | 2.5 |
| Schlagzähigkeit 23°C | kJ/m² | 48 | 52 | 49 | 54 | 62 |
| Schlagzähigkeit -30°C | kJ/m² | 40 | 45 | 42 | 36 | 54 |
| Kerbschlagzähigkeit 23°C | kJ/m² | 11 | 12 | 12 | 12 | 14 |
| Kerbschlagzähigkeit -30°C | kJ/m² | 10 | 10 | 10 | 10 | 11 |
| Glasübergangstemperatur | °C | 145 | 155 | 140 | 145 | 155 |
| Formbeständigkeit HDT/A | °C | 110 | 95 | 115 | 120 | 104 |
| Transmission | % | 77 | 70 | n.b. | n.b. | n.b. |

| | | | | | | |
|---|---|---|---|---|---|---|
| n.b.: nicht bestimmt o.B.: ohne Bruch | | | | | | |

- Grilamid TR90:: Transparentes Polyamid PA MACM12 (EMS-CHEMIE)
- Grilamid TR55:: Transparentes Polyamid PA MACMI/12 (EMS-CHEMIE)
- Grilamid L20: Polyamid PA 12 mittlerer Viskosität (EMS-CHEMIE)
- Glasfaser 10 µm: Vetrotex 995 EC10-4.5, Glasfaser mit rundem Querschnitt von 10 µm Durchmesser und einer mittleren Länge von 4.5 mm (Vetrotex).
- Glasfaser 6 µm: OC Micromax 771-6, Glasfaser mit rundem Querschnitt von 6 µm Durchmesser und einer mittleren Länge von 3 mm (Owens Corning).
- Weisspigment: Zinksulfid Sachtolith HDS (Sachtleben)
- Irganox 1098: Phenolisches Antioxidants (BASF)
- Hostanox PAR24: Phosphit enthaltendes Antioxidants (Clariant)

Die erfindungsgemässen Polyamidimide B1 bis B5 haben trotz tieferer Glasübergangstemperatur im Vergleich zu transparenten Polyamiden wie z.B. VB1 eine höhere Steifigkeit bei vergleichbarer Zähigkeit (Schlagzähigkeit, Kerbschlagzähigkeit, Reissdehnung).

Im Vergleich der Polyamidimide B6 und B7 mit einem ähnlich steifen transparenten Polyamid VB2 fällt auf, dass die Polyamidimide nach der Erfindung eine höhere Kerbschlagzähigkeit und eine deutlich bessere Spannungsrissbeständigkeit aufweisen.

Bei den mit Glasfasern verstärkten Formmassen wie z.B. B8, B9 und B10 zeigt sich, dass die vorgeschlagenen Polyamidimid basierten Formmassen eine höhere Steifigkeit, eine höhere Festigkeit sowie eine höhere Formbeständigkeit HDT/A trotz tieferer Glasübergangstemperatur im Vergleich mit den Formmassen auf Basis der transparenten Polyamide VB3 und VB4 aufweisen. Dabei wird gleichzeitig die hohe Zähigkeit der transparenten Polyamide erreicht.

Die unverstärkten Polyamidimide B1 bis B7 weisen eine Transmission gemessen an 2 mm dicken Platten von bis zu 90 % auf und sind damit durchaus auf dem Niveau der transparenten Polyamide VB1 und VB2. Die Hazewerte der auf Laboranlagen hergestellten Polyamidimide liegen leicht über dem Niveau der grosstechnisch produzierten transparenten Polyamide. Weitere Optimierung des Herstellprozesses erlaubt, dass die vorgeschlagenen Polyamidimide ähnliche Haze-Werte erreichen wie die transparenten Polyamide.

Insbesondere bei den niedrig verstärkten Formassen ergibt sich aufgrund der geringeren Unterschiede der Brechungsindizes von Matrix und Glasfasern für die auf Polyamidimid beruhenden Formmassen eine höhere Transmission (Vergleich von B8 und VB3).

## Patentansprüche

1. Thermoplastische Formmasse auf Basis eines Polyamidimids, **gekennzeichnet durch** folgende Zusammensetzung:
(F1) 30 - 100 Gew.-% wenigstens eines transparenten Polyamidimids auf Basis von einer oder mehreren verschiedenen Imidodicarbonsäuren (AB) oder deren Derivaten, und cycloaliphatischen Diaminen (C) ausgewählt aus der Gruppe bestehend aus: Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethy-cyclohexyl)-methan (TMDC), 2,6-Bis-(aminomethyl)-norbornan, 1,3-Bis-(aminomethyl)cyclohexan, 1,4-Bis-(aminomethyl)cyclohexan, 2,2-(4,4'-Diaminodicyclohexyl)propan (PACP) oder Mischungen dieser cycloaliphatischen Diamine,
wobei die Imidodicarbonsäuren (AB) oder deren Derivate ausgewählt sind aus der Gruppe der Imidodicarbonsäuren (AB) mit folgenden Strukturformeln: 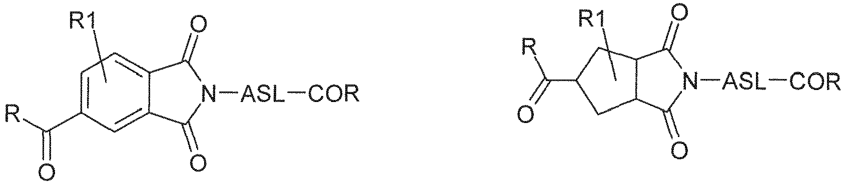 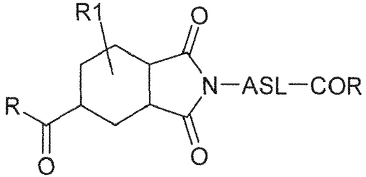 wobei:
ASL = (CH₂)₅₋₁₁, Phenylen, (Ylomethyl)phenyl, Bis(ylomethyl)benzol, Cyclohexandiyl, (Ylomethyl)cyclohexyl, Bis(ylomethyl)cyclohexan, Cyclopentandiyl, (Ylomethyl)cyclopentyl, Bis(ylomethyl)cyclopentan,
R = OH, O-Alkyl, O-Aryl, Cl, NH-ASL-COOH, Br, O-(CO)-Alkyl, O-(CO)-Aryl,
R1 = H, Methyl, Ethyl, Propyl, mit der Massgabe, dass der Ring ein- oder zweifach substituiert sein kann, und bei doppelter Substitution des Ringes die beiden Substituenten aus der Gruppe ausgewählt aber verschieden sein können;
mit der Maßgabe, dass das transparente Polyamidimid frei von Bausteinen ist, in welchen die genannten cycloaliphatischen Diamine (C) mit wenigstens einer ihrer Aminogruppen das Imido-Element von Imido-Aminocarboxylsäuren, die den genannten Imidodicarbonsäuren (AB) entsprechen indem in diesen die genannten cycloaliphatischen Diamine (C) das darin enthaltene Strukturelement N-ASL-COR ersetzen, bilden,
und mit der Maßgabe, dass das transparente Polyamidimid frei ist von aromatischen Diaminen
(F2) 0 - 70 Gew.-% Verstärkungs- und/oder Füllstoffe
(F3) 0 - 50 Gew.-% Additive und/oder weitere, vom Polyamidimid verschiedene Polymere,
wobei die Komponenten F1 bis F3 zusammen 100% ergeben.

2. Formmasse nach Anspruch 1, **dadurch gekennzeichnet, dass** das Polyamidimid ausschließlich aufgebaut ist aus
einem Disäure-Anteil ausschliesslich aufgebaut aus:
20-100 mol-% von einer oder mehrerer der genannten Imidodicarbonsäuren (AB) oder deren Derivate;
0-80 mol-% wenigstens einer weiteren Disäure (D), welche von den genannten Imidodicarbonsäuren (AB) verschieden ist;
wobei sich die Disäure-Anteile auf 100 mol-% ergänzen,
und einem Diamin-Anteil ausschliesslich aufgebaut aus:
20-100 mol-% des wenigstens einen cycloaliphatischen Diamins (C);
0-80 mol-% wenigstens eines weiteren, nicht-aromatischen Diamins (E), das verschieden ist vom genannten cycloaliphatischen Diamin,
wobei sich die Diamin-Anteile auf 100% ergänzen.

3. Formmasse nach Anspruch 1, **dadurch gekennzeichnet, dass** das Polyamidimid ausschließlich aufgebaut ist aus einer oder mehrerer der genannten Imidodicarbonsäuren (AB) oder deren Derivate und den genannten cycloaliphatischen Diaminen (C).

4. Formmasse nach Anspruch 1, **dadurch gekennzeichnet, dass** im Polyamidimid wenigstens eine Imidodicarbonsäure (AB) oder dessen Derivat, oder der ganze Anteil an Imidodicarbonsäure (AB) oder dessen Derivat, folgender Strukturformel entspricht: 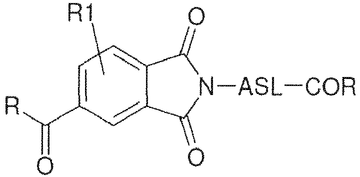
wobei R1 = H und/oder ASL = (CH₂)₅₋₁₁ und/oder R = OH, NH-ASL-COOH,
wobei die Imidodicarbonsäure (AB) oder dessen Derivat ausgewählt ist aus der Gruppe bestehend aus: Trimellitimidocapronsäure, Trimellitimidoundecansäure, Trimellitimidododecansäure, oder deren Derivate mit R = O-Alkyl, O-Aryl, Cl, Br, NH-ASL-COOH, O-(CO)-Alkyl, O-(CO)-Aryl, oder einer Mischung daraus.

5. Formmasse nach einem der vorhergehenden Ansprüche, **dadurch gekennzeichnet, dass** im Polyamidimid eine die Imidodicarbonsäure (AB) oder deren Derivat wenigstens teilweise bildende cycloaliphatische oder aromatische Tricarbonsäure (A) bzw. deren Derivate, einschliesslich Derivate in Form von Säurechloriden, Estern oder Anhydriden, ausgewählt ist aus der Gruppe bestehend aus: Cyclopentan-1,2,4-tricarbonsäure, 2-Methyl-cyclopentan-1,2,4-tricarbonsäure, 3-Methyl-cyclopentan-1,2,4-tricarbonsäure, 3,5-Dimethyl-cyclopentan-1,2,4-tricarbonsäure, Cyclohexan-1,2,4-tricarbonsäure, 2-Methyl-cyclohexan-1,2,4-tricarbonsäure, 3-Methyl-cyclohexan-1,2,4-tricarbonsäure, 4-Methyl-cyclohexan-1,2,4-tricarbonsäure, 5-Methyl-cyclohexan-1,2,4-tricarbonsäure, 1,2-Dimethylcyclohexan-1,2,4-tricarbonsäure, 3,5-Dimethyl-cyclohexan-1,2,4-tricarbonsäure, 2,4-Dimethyl-cyclohexan-1,2,4-tricarbonsäure, oder eine Mischung davon.

6. Formmasse nach einem der vorhergehenden Ansprüche, **dadurch gekennzeichnet, dass** im Polyamidimid eine die Imidodicarbonsäure (AB) oder deren Derivat wenigstens teilweise bildende cycloaliphatische oder aromatische Tricarbonsäure (A) bzw. deren Derivate, oder bei einer Mischung verschiedener cycloaliphatischer oder aromatischer Tricarbonsäuren (A) oder deren Derivate die Summe dieser Tricarbonsäuren, im gesamten Polyamidimid zu einer die Imidodicarbonsäure (AB) oder deren Derivat wenigstens teilweise bildenden Aminocarbonsäure oder Lactam (B), als aliphatische Aminocarbonsäure oder aliphatisches Lactam (B) mit 6-12 Kohlenstoffatomen ausgebildet, oder bei einer Mischung verschiedener solcher Aminocarbonsäuren oder Lactame (B) die Summe dieser Systeme, in einem molaren Verhältnis im Bereich von 1:2.5 bis 1.5:1, oder im Bereich von 1:2 bis 1.1:1, oder im Bereich von 1:1.5 bis 1:1 oder im Bereich von 1:1 liegt.

7. Formmasse nach einem der vorhergehenden Ansprüche, **dadurch gekennzeichnet, dass** im Polyamidimid die wenigstens eine Imidodicarbonsäure (AB) oder deren Derivat, bei einer Mischung verschiedener Imidodicarbonsäuren (AB) oder deren Derivate die Summe dieser Dicarbonsäuren, im Polyamidimid zum cycloaliphatischen Diamin (C), oder bei einer Mischung verschiedener cycloaliphatischer Diaminen (C) zur Summe dieser Diamine, im molaren Verhältnis im Bereich von 1.5:1 zu 1:1.5, oder im Verhältnis 1:1 liegt und/oder dass das Polyamidimid auf Basis von wenigstens einer weiteren, von der Komponente (AB) verschiedenen Disäure (D) aufgebaut ist, wobei im gesamten Polyamidimid der Disäure-Anteil gebildet aus der Komponente (AB) wenigstens 20 mol-% ausmacht, oder im Bereich von 80% bis 20 mol-%, oder 30 bis 70 mol-% und der Rest ergänzend auf 100 mol-% durch die Komponente (D) gebildet wird, und/oder dass das Polyamidimid auf Basis von wenigstens einer weiteren, von der Komponente (AB) verschiedenen Disäure (D) aufgebaut ist, wobei die Komponente (D) ausgewählt ist aus der folgenden Gruppe: bifunktionelle, aliphatische, cycloaliphatische oder aromatische Dicarbonsäuren mit 2 bis 36 Kohlenstoffatomen, oder mit 6-18 Kohlenstoffatomen.

8. Formmasse nach Anspruch 7, **dadurch gekennzeichnet, dass** die Komponente (D) ausgewählt ist aus der folgenden Gruppe: Adipinsäure, Korksäure, Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Terephthalsäure, Naphthalindicarbonsäure, cis- und/oder trans-Cyclohexan-1,4-dicarbonsäure und/oder cis- und/oder trans-Cyolohexan-1,3-dicarbonsäure (CHDA) und Gemische daraus.

9. Formmasse nach einem der vorhergehenden Ansprüche, **dadurch gekennzeichnet, dass** das Polyamidimid auf Basis von wenigstens eines weiteren, von der Komponente (C) verschiedenen Diamins (E) aufgebaut ist, wobei im gesamten Polyamidimid der Diamin-Anteil gebildet aus der Komponente (C) wenigstens 20 mol-% ausmacht, oder im Bereich von 80% bis 20 mol-%, oder im Bereich von 30 bis 70 mol-% und der Rest ergänzend auf 100 mol-% durch die Komponente (E) gebildet wird,
und/oder dass das Polyamidimid auf Basis von wenigstens eines weiteren, von der Komponente (C) verschiedenen Diamins (E) aufgebaut ist, wobei die Komponente (E) ausgewählt ist aus der folgenden Gruppe: lineares oder verzweigtes aliphatisches Diamin mit 4 bis 18 Kohlenstoffatomen, oder mit 6 bis 14 Kohlenstoffatomen,
und/oder dass das Polyamidimid auf Basis von wenigstens eines weiteren, von der Komponente (C) verschiedenen Diamins (E) aufgebaut ist, wobei die Komponente (E) ausgewählt ist aus folgender Gruppe: 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, 1,15-Pentadecandiamin, 1,16-Hexadecandiamin, 1,17-Heptadecandiamin,1, 18-Octadecandiamin, meta-Xylylendiamin und para-Xylylendiamin oder Mischungen davon.

10. Formmasse nach einem der vorhergehenden Ansprüche, **dadurch gekennzeichnet, dass** im Polyamidimid die Imidodicarbonsäure (AB) ausgewählt ist aus der Gruppe bestehend aus: Trimellitimidocapronsäure, Trimellitimidoundecansäure, Trimellitimidolaurinsäure oder einer Mischung daraus, und dass das cycloaliphatische Diamin (C) ausgewählt ist aus der Gruppe bestehend aus: Bis-(4-amino-3-methyl-cyclohexyl)-methan (MACM), Bis-(4-amino-cyclohexyl)-methan (PACM), oder einer Mischung daraus, insbesondere nur Bis-(4-amino-3-methylcyclohexyl)-methan (MACM),
und/oder dass im Polyamidimid die Imidodicarbonsäure (AB) ausgewählt ist aus der Gruppe bestehend aus: Trimellitimidocapronsäure, Trimellitimidoundecansäure, Trimellitimidolaurinsäure oder einer Mischung daraus, und dass das cycloaliphatische Diamin (C) ausgewählt ist aus der Gruppe bestehend aus: Bis-(4-amino-3-methyl-cyclohexyl)-methan (MACM), Bis-(4-amino-cyclohexyl)-methan (PACM), oder einer Mischung daraus, unddie Imidodicarbonsäure (AB), bei einer Mischung verschiedener Imidodicarbonsäuren (AB) die Summe dieser Dicarbonsäuren, im Polyamidimid zum cycloaliphatischen Diamin (C), oder bei einer Mischung verschiedener cycloaliphatischer Diamine (C) zur Summe dieser Diamine, im molaren Verhältnis 1:1 liegt.

11. Formmasse nach einem der vorhergehenden Ansprüche, **dadurch gekennzeichnet, dass** das Polyamidimid auf Basis von wenigstens einer weiteren, von der Komponente (AB) verschiedenen Disäure (D) aufgebaut ist, und diese weitere Dicarbonsäure (D) Terephthalsäure, Isophthalsäure, Adipinsäure oder Cyclohexan-1,3-dicarbonsäure oder eine Mischung davon ist.

12. Formmasse nach einem der vorhergehenden Ansprüche **gekennzeichnet durch** einen Anteil von (F2) im Bereich von 10-70 Gew.-%, oder im Bereich von 20-60 Gew.-%.

13. Formmasse nach einem der vorhergehenden Ansprüche, **dadurch gekennzeichnet, dass** als Komponente (F2) faser- und/oder partikelförmige Verstärkungs- und/oder Füllstoffe zugesetzt sind, einschliesslich Glasfasern, Kohlenstofffasern, Metall- oder Kunststofffasern, wobei diese runden oder flachen Querschnitt aufweisen können, teilchenförmige Füllstoffe auf Basis von Talk, Glimmer, Silikat, Quarz, Titandioxid, Wollastonit, Kaolin, amorphe Kieselsäuren, Magnesiumcarbonat, Magnesiumhydroxid, Kreide, Kalk, Feldspat, Bariumsulfat, Voll- oder Hohl-Glaskugeln oder gemahlenem Glas, dauerhaft magnetische bzw. magnetisierbare Metallverbindungen und/oder Legierungen, wobei die Füllstoffe oberflächenbehandelt sein können.

14. Formmasse nach einem der vorhergehenden Ansprüche, **dadurch gekennzeichnet, dass** als Komponente (F3) Stabilisatoren, Nukleierungsmittel, Verarbeitungshilfsmittel und/oder Schlagzähmodifikatoren enthalten sind, wobei bis zu 45 Gew.-% eines oder mehrerer Schlagzähmodifikatoren, oder im Bereich zwischen 5 und 30 Gew.-%, enthalten sind.

15. Gegenstand mit wenigstens einem Bereich oder einer Schicht aus der Formmasse nach einem der vorhergehenden Ansprüche, wobei es sich um eine Folie, ein Einlegeteil, ein Profil, ein Rohr, einen Hohlkörper, einen optisch variablen Filter, eine optische Linse handeln kann, oder um eine ophthalmische Linse, und wobei die Lichttransmission, jeweils bestimmt bei 23°C mit einem nach ASTM D-1003 (Lichtart C) an Platten 60x60x2 mm, wenigstens 80%, oder wenigstens 85% oder wenigstens 88% beträgt.

16. Verfahren zur Herstellung einer Formmasse nach einem der Ansprüche 1 - 14 **dadurch gekennzeichnet, dass** das Polyamidimid hergestellt wird, indem in einem ersten Reaktionsschritt eine Imidodicarbonsäuren (AB) oder ein Derivat davon, ausgewählt aus der Gruppe der Imidodicarbonsäuren (AB) mit folgenden Strukturformeln: 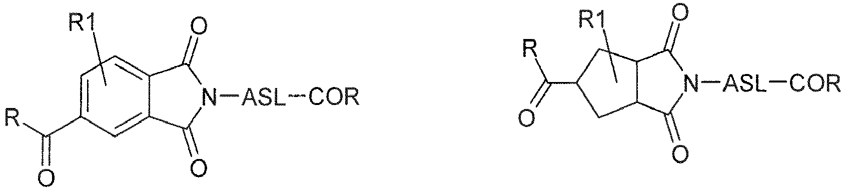 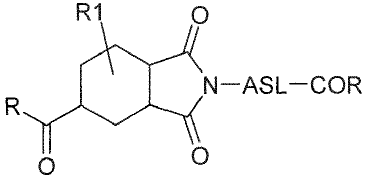 wobei:
ASL = (CH₂)₅₋₁₁, Phenylen, (Ylomethyl)phenyl, Bis(ylomethyl)benzol, Cyclohexandiyl, (Ylomethyl)cyclohexyl, Bis(ylomethyl)cyclohexan, Cyclopentandiyl, (Ylomethyl)cyclopentyl, Bis(ylomethyl)cyclopentan,
R = OH, O-Alkyl, O-Aryl, Cl, NH-ASL-COOH, Br, O-(CO)-Alkyl, O-(CO)-Aryl, R1 = H, Methyl, Ethyl, Propyl, mit der Massgabe, dass der Ring ein- oder zweifach substituiert sein kann, und bei doppelter Substitution des Ringes die beiden Substituenten aus der Gruppe ausgewählt aber verschieden sein können aufgebaut wird ausgehend von den entsprechenden cycloaliphatischen oder aromatischen Tricarbonsäuren mit wenigstens zwei vicinalen Carboxylgruppen (A) bzw. deren Derivaten und Aminocarbonsäure oder Lactam (B), und in einem zweiten nachgeschalteten separaten Schritt diese Imidodicarbonsäuren (AB) oder deren Derivate mit cycloaliphatischen Diaminen (C), ausgewählt aus der Gruppe bestehend aus: Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethy-cyclohexyl)-methan (TMDC), 2,6-Bis-(aminomethyl)-norbornan, 1,3-Bis-(aminomethyl)cyclohexan, 1,4-Bis-(aminomethyl)cyclohexan, 2,2-(4,4'-Diaminodicyclohexyl)propan (PACP) oder Mischungen dieser cycloaliphatischen Diamine, sowie ggf. weiteren von der Komponente (AB) verschiedenen Disäuren (D) und/oder weiteren, von der Komponente (C) verschiedenen, einschliesslich nicht-aromatischen Diaminen (E) zum Polyamidimid reagiert werden.

## Claims

1. A thermoplastic moulding compound based on a polyamide-imide, **characterised by** the following composition:
(F1) 30-100 % by weight of at least one polyamide-imide based on one or more different imido-dicarboxylic acids (AB) or derivatives thereof, and cycloaliphatic diamines (C) selected from the group consisting of: bis-(4-amino-3-methylcyclohexyl)-methane (MACM), bis-(4-amino-cyclohexyl)-methane (PACM), bis-(4-amino-3-ethyl-cyclohexyl)-methane (EACM), bis-(4-amino-3,5-dimethy-cyclohexyl)-methane (TMDC), 2,6-bis-(aminomethyl)-norbornane, 1,3-bis-(aminomethyl)cyclohexane, 1,4-bis-(aminomethyl)cyclohexane, 2,2-(4,4'-diaminodicyclohexyl)propane (PACP) or mixtures of these cycloaliphatic diamines, wherein the imido-dicarboxylic acids (AB) or derivatives thereof are selected from the group of imido-dicarboxylic acids (AB) having the following structural formulas: 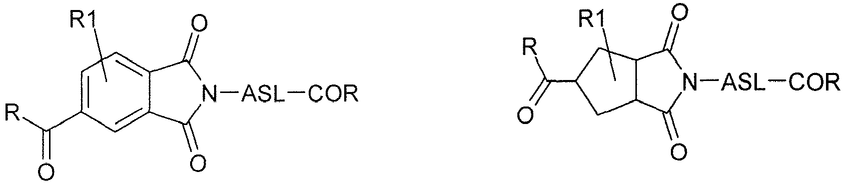 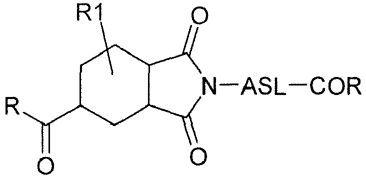 wherein:
ASL = (CH₂)₅₋₁₁, phenylene, (ylomethyl)phenyl, bis(ylomethyl)benzene, cyclohexanediyl, (ylomethyl)cyclohexyl, bis(ylomethyl)cyclohexane, cyclopentanediyl, (ylomethyl)cyclopentyl, bis(ylomethyl)cyclopentane,
R = OH, O-alkyl, O-aryl, Cl, NH-ASL-COOH, Br, O-(CO)-alkyl, O-(CO)-aryl, R1 = H, methyl, ethyl, propyl, with the provision that the ring can be substituted once or twice, and, with double substitution of the ring, the two substituents can be selected from the group, but may be different;
with the proviso that the transparent polyamide-imide is free from building blocks in which said cycloaliphatic diamines (C) are, with at least one amino-group thereof, forming the imido-element of imido-aminocarboxylic acids corresponding to said imido-dicarboxylic acids (AB) and in which said cycloaliphatic diamines (C) are replacing the structural element N-ASL-COR therein,
and with the proviso that the transparent polyamide-imide is free from aromatic diamines;
(F2) 0-70 % by weight of reinforcing agents and/or fillers;
(F3) 0-50 % by weight of additives and/or further polymers, different from the polyamide-imide,
wherein the components A to C together give 100 %.

2. The thermoplastic moulding compound according to Claim 1, **characterised in that** the polyamide-imide is based exclusively on
a diacid part, exclusively based on
20-100 mol-% of one or more of said imido-dicarboxylic acids (AB) or derivatives thereof
0-80 mol-% of at least one further diacid (D), different from said imido-dicarboxylic acids (AB),
wherein the diacid parts supplement to 100 mol-% ;
and a diamine part, exclusively based on
20-100 mol-% of at least one of said cycloaliphatic diamines (C),
0-80 mol-% of at least one further, non-aromatic diamine (E), different from said cycloaliphatic diamines (C)
wherein the diamine parts supplement to 100 mol-%.

3. The thermoplastic moulding compound according to Claim 1, **characterised in that** it is exclusively based on one or more of said imido-dicarboxylic acids (AB) or derivatives thereof, and said cycloaliphatic diamines (C).

4. The thermoplastic moulding compound according to one of the preceding claims, **characterised in that** at least one imido-dicarboxylic acid (AB) or derivative thereof, or the entire proportion of imido-dicarboxylic acid (AB) or derivative thereof, corresponds to the following structural formula: 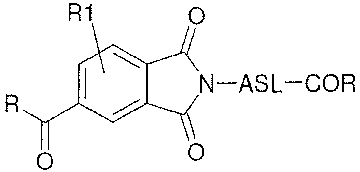 wherein , R1 = H and/or ASL = (CH₂)₅₋₁₁ and/or R = OH, NH-ASL-COOH, wherein the imido-dicarboxylic acid (AB) or derivative thereof is selected from the group consisting of: trimellitic imido-caproic acid, trimellitic imido-undecanoic acid, trimellitic imido-dodecanoic acid, or derivatives thereof where R = O-alkyl, O-aryl, Cl, Br, NH-ASL-COOH, O-(CO)-alkyl, O-(CO)-aryl, or a mixture thereof.

5. The thermoplastic moulding compound according to one of the preceding claims, **characterised in that** in the polyamide-imide a cycloaliphatic or aromatic tricarboxylic acid (A) or derivatives thereof, including derivatives in the form of acid chlorides, esters or anhydrides, forming the imido-dicarboxylic acid (AB) or derivative thereof at least in part, is selected from the group consisting of: cyclopentane-1,2,4-tricarboxylic acid, 2-methyl-cyclopentane-1,2,4-tricarboxylic acid, 3-methyl-cyclopentane-1,2,4-tricarboxylic acid, 3,5-dimethyl-cyclopentane-1,2,4-tricarboxylic acid, cyclohexane-1,2,4-tricarboxylic acid, 2-methylcyclohexane-1,2,4-tricarboxylic acid, 3-methyl-cyclohexane-1,2,4-tricarboxylic acid, 4-methyl-cyclohexane-1,2,4-tricarboxylic acid, 5-methyl-cyclohexane-1,2,4-tricarboxylic acid, 1,2-dimethyl-cyclohexane-1,2,4-tricarboxylic acid, 3,5-dimethylcyclohexane-1,2,4-tricarboxylic acid, 2,4-dimethyl-cyclohexane-1,2,4-tricarboxylic acid, or a mixture thereof.

6. The thermoplastic moulding compound according to one of the preceding claims, **characterised in that** in the polyamide-imide the molar ratio in the overall polyamide-imide of a cycloaliphatic or aromatic tricarboxylic acid (A) or derivatives thereof, or, with a mixture of different cycloaliphatic or aromatic tricarboxylic acids (A) or derivatives thereof, the sum of these tricarboxylic acids, forming the imido-dicarboxylic acid (AB) or derivative thereof at least in part, to an aminocarboxylic acid or lactam (B), formed as an aliphatic aminocarboxylic acid or aliphatic lactam (B) comprising 6-12 carbon atoms, or, with a mixture of different such aminocarboxylic acids or lactams (B), the sum of these systems, forming the imido-dicarboxylic acid (AB) or derivative thereof at least in part, lies in the range from 1:2.5 to 1:1, or in the range from 1:2 to 1:1, or in the range from 1:1.5 to 1:1, or lies in the region of 1:1.

7. The thermoplastic moulding compound according to one of the preceding claims, **characterised in that** the molar ratio in the polyamide-imide of at least one imido-dicarboxylic acid (AB) or derivative thereof, or, with a mixture of different imido-dicarboxylic acids (AB) or derivatives thereof, the sum of these dicarboxylic acids, to the cycloaliphatic diamine (C), or, with a mixture of different cycloaliphatic diamines (C), to the sum of these diamines, lies in the range from 1.5:1 to 1:1.5, or at 1:1
and/or **characterised in that** the polyamide-imide is formed on the basis of at least one further diacid (D), different from the component (AB), wherein, in the overall polyamide-imide, the diacid proportion formed from the component (AB) makes up at least 20 mol %, or lies in the range from 80 mol % to 20 mol %, in particular 30 to 70 mol %, and the rest making 100 mol % is formed by the component (D), and/or **in that** the polyamide-imide is formed on the basis of at least one further diacid (D), different from the component (AB), wherein the component (D) is preferably selected from the following group: bifunctional, aliphatic, cycloaliphatic or aromatic dicarboxylic acids, preferably comprising 2 to 36 carbon atoms, particularly or comprising 6-18 carbon atoms.

8. The thermoplastic moulding compound according to one of the preceding claims, **characterised in that** component (D) is selected from the following group: adipic acid, suberic acid, azelaic acid, sebacic acid, undecane diacid, dodecane diacid, tridecane diacid, tetradecane diacid, pentadecane diacid, hexadecane diacid, heptadecane diacid, octadecane diacid, C36-dimer fatty acid, isophthalic acid, terephthalic acid, naphthalene dicarboxylic acid, cis- and/or trans-cyclohexane-1,4-dicarboxylic acid and/or cis- and/or trans-cyolohexane-1,3-dicarboxylic acid (CHDA), and mixtures thereof.

9. The thermoplastic moulding compound according to one of the preceding claims, **characterised in that** the polyamide-imide is formed on the basis of at least one further diamine (E), different from the component (C), wherein, in the overall polyamide-imide, the diamine proportion formed from the component (C) makes up at least 20 mol %, or lies in the range from 80 % to 20 mol %, or of 30 to 70 mol %, and the rest making up 100 mol % is formed by the component (E),
and/or n that the polyamide-imide is formed on the basis of at least one further diamine (E), different from the component (C), wherein the component (E) is selected from the following group: linear or branched aliphatic diamine, preferably comprising 4 to 18 carbon atoms, particularly preferably comprising 6 to 14 carbon atoms, particularly preferably from the following group: 1,4-butanediamine, 1,5-pentanediamine, 2-methyl-1,5-pentanediamine, 2-butyl-2-ethyl-1,5-pentanediamine, 1,6-hexanediamine, 2,2,4-trimethylhexamethylenediamine, 2,4,4-trimethylhexamethylenediamine, 1,8-octanediamine, 2-methyl-1,8-octanediamine, 1,9-nonanediamine, 1,10-decanediamine, 1,11-undecanediamine, 1,12-dodecanediamine, 1,13-tridecanediamine, 1,14-tetradecanediamine, 1-15-pentadecanediamine, 1,16-hexadecanediamine, 1-17-heptadecanediamine, 1-18-octadecanediamine, meta-xylylenediamine and para-xylylenediamine, or mixtures thereof.

10. The thermoplastic moulding compound according to one of the preceding claims, **characterised in that** in the polyamide-imide the imido-dicarboxylic acid (AB) is selected from the group consisting of: trimellitic imido-caproic acid, trimellitic imido-undecanoic acid, trimellitic imido-lauric acid, or a mixture thereof, and **in that** the cycloaliphatic diamine (C) is selected from the group consisting of: bis-(4-amino-3-methyl-cyclohexyl)-methane (MACM), bis-(4-amino-cyclohexyl)-methane (PACM), or a mixture thereof, in particular just bis-(4-amino-3-methylcyclohexyl)-methane (MACM),
and/or **in that** in the polyamide-imide the imido-dicarboxylic acid (AB) is selected from the group consisting of: trimellitic imido-caproic acid, trimellitic imido-undecanoic acid, trimellitic imido-lauric acid, or a mixture thereof, and **in that** the cycloaliphatic diamine (C) is selected from the group consisting of: bis-(4-amino-3-methyl-cyclohexyl)-methane (MACM), bis-(4-amino-cyclohexyl)-methane (PACM), or a mixture thereof, wherein the molar ratio in the polyamide-imide of imido-dicarboxylic acid (AB), or, with a mixture of different imido-dicarboxylic acids (AB), the sum of these dicarboxylic acids, to the cycloaliphatic diamine (C), or, with a mixture of different cycloaliphatic diamines (C), to the sum of these diamines, lies at 1:1.

11. The thermoplastic moulding compound according to one of the preceding claims, **characterised in that** the polyamide-imide is formed on the basis of at least one further diacid (D), different from the component (AB), and this further dicarboxylic acid (D) is terephthalic acid, isophthalic acid, adipic acid, or cyclohexane-1,3-dicarboxylic acid, or a mixture thereof.

12. The thermoplastic moulding compound based on a polyamide-imide according to one of the preceding claims, **characterised by** a proportion of (F2) in the range of 10-70 % by weight, preferably 20-60 % by weight.

13. The thermoplastic moulding compound compound according to Claim any of the preceding claims, **characterised in that**, as component (F2), fibrous and/or particulate reinforcing agents and/or fillers are added, including glass fibres, carbon fibres, metal or plastic fibres, wherein these may have a round or flat cross section, particulate fillers based on talc, mica, silicate, quartz, titanium dioxide, wollastonite, kaolin, amorphous silicic acids, magnesium carbonate, magnesium hydroxide, chalk, lime, feldspar, barium sulphate, solid or hollow glass balls or ground glass, permanently magnetic or magnetisable metal compounds and/or alloys, wherein the fillers can be surface-treated.

14. The thermoplastic moulding compound compound according to any of the preceding claims, **characterised in that**, as component (F3), stabilisers, nucleation agents, processing aids and/or impact toughness modifiers are contained, wherein up to 45 % by weight of one or more impact toughness modifiers, or in the range between 5 and 30 % by weight, can be contained.

15. An object having at least one region or a layer formed from the thermoplastic moulding compound compound according to one of Claims 1-14, wherein said object can be a film, an insert part, a profile, a tube, a hollow body, an optically variable filter, an optical lens, particularly preferably an ophthalmic lens, and wherein the light transmission determined at 23°C according to ASTM D-1003 (light type C) on plates 60x60x2 mm, is at least 80 %, or at least 85 % and or at least 88 %.

16. A method for producing a thermoplastic moulding compound according to any of the preceding claims, wherein the polyamide-imide, is obtained in that, in a first reaction step, an imido-dicarboxylic acid (AB) selected from the group of imido-dicarboxylic acids (AB) having the following structural formulas: 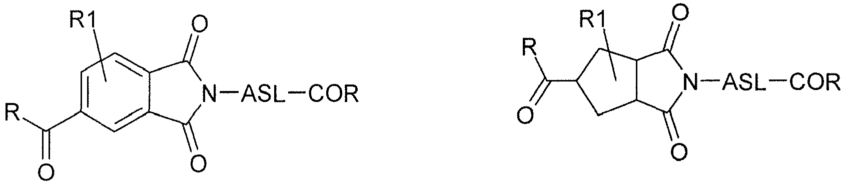 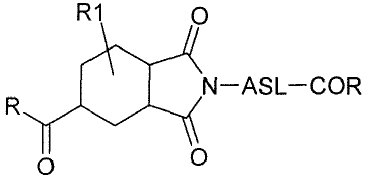 wherein:
ASL = (CH₂)₅₋₁₁, phenylene, (ylomethyl)phenyl, bis(ylomethyl)benzene, cyclohexanediyl, (ylomethyl)cyclohexyl, bis(ylomethyl)cyclohexane, cyclopentanediyl, (ylomethyl)cyclopentyl, bis(ylomethyl)cyclopentane,
R = OH, O-alkyl, O-aryl, Cl, NH-ASL-COOH, Br, O-(CO)-alkyl, O-(CO)-aryl,
R1 = H, methyl, ethyl, propyl, with the provision that the ring can be substituted once or twice, and, with double substitution of the ring, the two substituents can be selected from the group, but may be different
is formed starting from the corresponding cycloaliphatic or aromatic tricarboxylic acids having at least two vicinal carboxyl groups (A) or derivatives thereof and amino carboxylic acid or lactam (B), and, in a second subsequent and separate step, these imido-dicarboxylic acids (AB) or derivatives thereof are reacted with cycloaliphatic diamines (C) selected from the group consisting of: bis-(4-amino-3-methyl-cyclohexyl)-methane (MACM), bis-(4-amino-cyclohexyl)-methane (PACM), bis-(4-amino-3-ethyl-cyclohexyl)-methane (EACM), bis-(4-amino-3,5-dimethy-cyclohexyl)-methane (TMDC), 2,6-bis-(aminomethyl)-norbornane, 1,3-bis-(aminomethyl)cyclohexane, 1,4-bis-(aminomethyl)cyclohexane, 2,2-(4,4'-diaminodicyclohexyl)propane (PACP) or mixtures of these cycloaliphatic diamines, and optionally further diacids (D), different from the component (AB), and/or further, inclusiove of non-aromatic diamines (E), different from the component (C), to form the polyamide-imide.

## Revendications

1. Matériau de moulage thermoplastique à base d'un polyamide-imide, **caractérisé par** la composition suivante :
(F1) 30 à 100 % en poids d'au moins un polyamide-imide transparent à base d'un ou de plusieurs acides imido-dicarboxyliques (AB) différents ou leurs dérivés, et de diamines cycloaliphatiques (C) choisies dans le groupe constitué par : le bis-(4-amino-3-méthyl-cyclohexyl)-méthane (MACM), le bis-(4-amino-cyclohexyl)-méthane (PACM), le bis-(4-amino-3-éthyl-cyclohexyl)-méthane (EACM), le bis-(4-amino-3,5-diméthyl-cyclohexyl)-méthane (TMDC), le 2,6-bis-(aminométhyl)-norbornane, le 1,3-bis-(aminométhyl)cyclohexane, le 1,4-bis-(aminométhyl)cyclohexane, le 2,2-(4,4'-diaminodicyclohexyl)propane (PACP) ou les mélanges de ces diamines cycloaliphatiques,
les acides imido-dicarboxyliques (AB) ou leurs dérivés étant choisis dans le groupe des acides imido-dicarboxyliques (AB) ayant les formules structurales suivantes : 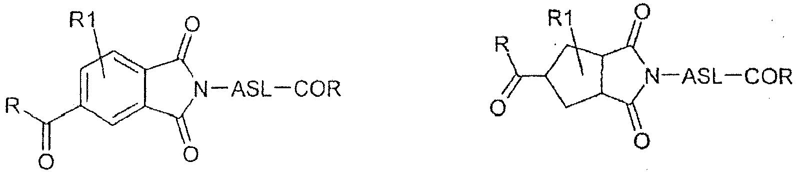 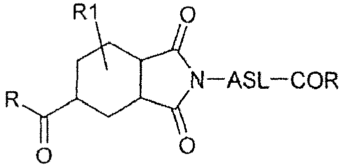 dans lesquelles
ASL = (CH₂)₅₋₁₁, phénylène, (ylométhyl) phényle, bis(ylométhyl)benzène, cyclohexane-diyle, (ylométhyl)cyclohexyle, bis(ylométhyl)cyclohexane, cyclopentane-diyle, (ylométhyl)cyclopentyle, bis(ylométhyl)cyclopentane,
R = OH, O-alkyle, O-aryle, Cl, NH-ASL-COOH, Br, O-(CO)-alkyle, O-(CO)-aryle,
R1 = H, méthyle, éthyle, propyle, à condition que le cycle puisse être substitué une ou deux fois et, qu'en cas de substitution double du cycle, les deux substituants puissent être choisis dans le groupe, en pouvant toutefois être différents ;
à condition que le polyamide-imide transparent soit exempt de constituants dans lesquels les diamines cycloaliphatiques (C) mentionnées forment avec au moins un de leurs groupes amino l'élément imido d'acides imido-aminocarboxyliques qui correspondent aux acides imido-dicarboxyliques (AB) mentionnés en ce que les diamines cycloaliphatiques (C) mentionnées remplacent dans ceux-ci l'élément structural N-ASL-COR qu'ils contiennent,
et à condition que le polyamide-imide transparent soit exempt de diamines aromatiques,
(F2) 0 à 70 % en poids de matières renforçantes et/ou de charges,
(F3) 0 à 50 % en poids d'additifs et/ou d'autres polymères différents du polyamide-imide,
la somme des composants F1 à F3 étant de 100 %.

2. Matériau de moulage selon la revendication 1, **caractérisé en ce que** le polyamide-imide est exclusivement formé par :
une fraction diacide exclusivement formée par :
20 à 100 % en moles d'un ou de plusieurs des acides imido-dicarboxyliques (AB) mentionnés ou leurs dérivés ;
0 à 80 % en moles d'au moins un autre diacide (D), qui est différent des acides imido-dicarboxyliques (AB) mentionnés ;
la somme de la fraction diacide étant de 100 % en moles,
et une fraction diamine exclusivement formée par :
20 à 100 % en moles de ladite au moins une diamine cycloaliphatique (C) ;
0 à 80 % en moles d'au moins une autre diamine non aromatique (E), qui est différente de la diamine cycloaliphatique mentionnée,
la somme de la fraction diamine étant de 100 %.

3. Matériau de moulage selon la revendication 1, **caractérisé en ce que** le polyamide-imide est exclusivement formé par un ou plusieurs des acides imido-dicarboxyliques (AB) mentionnés ou leurs dérivés et les diamines cycloaliphatiques (C) mentionnées.

4. Matériau de moulage selon la revendication 1, **caractérisé en ce que**, dans le polyamide-imide, au moins un acide imido-dicarboxylique (AB) ou son dérivé ou la fraction entière d'acide imido-dicarboxylique (AB) ou son dérivé correspond à la formule structurale suivante : 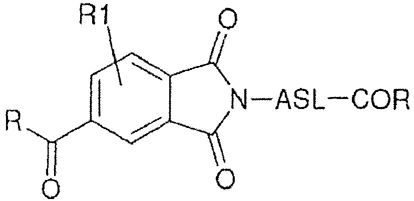
dans laquelle R1 = H et/ou ASL = (CH₂)₅₋₁₁ et/ou R = OH, NH-ASL-COOH,
l'acide imido-dicarboxylique (AB) ou son dérivé étant choisi dans le groupe constitué par : l'acide triméllitimidocapronique, l'acide triméllitimidoundécanoïque, l'acide triméllitimidododécanoïque ou leurs dérivés avec R = O-alkyle, O-aryle, Cl, Br, NH-ASL-COOH, O-(CO)-alkyle, O-(CO)-aryle ou un mélange de ceux-ci.

5. Matériau de moulage selon l'une quelconque des revendications précédentes, **caractérisé en ce que**, dans le polyamide-imide, un acide tricarboxylique cycloaliphatique ou aromatique (A) ou ses dérivés, y compris ses dérivés sous la forme de chlorures d'acide, d'esters ou d'anhydrides, formant au moins partiellement l'acide imido-dicarboxylique (AB) ou son dérivé est choisi dans le groupe constitué par : l'acide cyclopentane-1,2,4-tricarboxylique, l'acide 2-méthyl-cyclopentane-1,2,4-tricarboxylique, l'acide 3-méthyl-cyclopentane-1,2,4-tricarboxylique, l'acide 3,5-diméthyl-cyclopentane-1,2,4-tricarboxylique, l'acide cyclohexane-1,2,4-tricarboxylique, l'acide 2-méthyl-cyclohexane-1,2,4-tricarboxylique, l'acide 3-méthyl-cyclohexane-1,2,4-tricarboxylique, l'acide 4-méthyl-cyclohexane-1,2,4-tricarboxylique, l'acide 5-méthyl-cyclohexane-1,2,4-tricarboxylique, l'acide 1,2-diméthyl-cyclohexane-1,2,4-tricarboxylique, l'acide 3,5-diméthyl-cyclohexane-1,2,4-tricarboxylique, l'acide 2,4-diméthyl-cyclohexane-1,2,4-tricarboxylique ou un mélange de ceux-ci.

6. Matériau de moulage selon l'une quelconque des revendications précédentes, **caractérisé en ce que**, dans le polyamide-imide, un acide tricarboxylique cycloaliphatique ou aromatique (A) ou ses dérivés formant au moins partiellement l'acide imido-dicarboxylique (AB) ou son dérivé, ou en cas de mélange de différents acides tricarboxyliques cycloaliphatiques ou aromatiques (A) ou leurs dérivés, la somme de ces acides tricarboxyliques, est présent dans le polyamide-imide total par rapport à un acide aminocarboxylique ou un lactame (B) formant au moins partiellement l'acide imido-dicarboxylique (AB) ou son dérivé, en tant qu'acide aminocarboxylique aliphatique ou lactame aliphatique (B) de 6 à 12 atomes de carbone, ou en cas de mélange de différents acides aminocarboxyliques ou lactames (B), la somme de ces systèmes, en un rapport molaire dans la plage allant de 1:2,5 à 1,5:1, ou dans la plage allant de 1:2 à 1,1:1, ou dans la plage allant de 1:1,5 à 1:1 ou dans la plage de 1:1.

7. Matériau de moulage selon l'une quelconque des revendications précédentes, **caractérisé en ce que**, dans le polyamide-imide, ledit au moins un acide imido-dicarboxylique (AB) ou son dérivé, en cas de mélange de différents acides imido-dicarboxyliques (AB) ou leurs dérivés, la somme de ces acides dicarboxyliques, est présent dans le polyamide-imide par rapport à la diamine cycloaliphatique (C), ou en cas de mélange de différentes diamines cycloaliphatiques (C), par rapport à la somme de ces diamines, en un rapport molaire dans la plage allant de 1,5:1 à 1:1,5, ou en un rapport de 1:1,
et/ou **en ce que** le polyamide-imide est formé à base d'au moins un autre diacide (D) différent du composant (AB), la fraction diacide dans le polyamide-imide total formée par le composant (AB) représentant au moins 20 % en moles, ou dans la plage allant de 80 à 20 % en moles, ou de 30 à 70 % en moles, et le reste jusqu'à 100 % en moles étant formé par le composant (D),
et/ou **en ce que** le polyamide-imide est formé à base d'au moins un autre diacide (D) différent du composant (AB), le composant (D) étant choisi dans le groupe suivant : les acides dicarboxyliques bifonctionnels, aliphatiques, cycloaliphatiques ou aromatiques de 2 à 36 atomes de carbone, ou de 6 à 18 atomes de carbone.

8. Matériau de moulage selon la revendication 7, **caractérisé en ce que** le composant (D) est choisi dans le groupe suivant : l'acide adipique, l'acide subérique, l'acide azélaïque, l'acide sébacique, l'acide undécanedioïque, l'acide dodécanedioïque, l'acide tridécanedioique, l'acide tétradécanedioïque, l'acide pentadécanedioïque, l'acide hexadécanedioïque, l'acide heptadécanedioique, l'acide octadécanedioïque, un acide gras dimère en C36, l'acide isophtalique, l'acide téréphtalique, l'acide naphtaline-dicarboxylique, l'acide cis- et/ou trans-cyclohexane-1,4-dicarboxylique et/ou l'acide cis- et/ou trans-cyclohexane-1,3-dicarboxylique (CHDA) et leurs mélanges.

9. Matériau de moulage selon l'une quelconque des revendications précédentes, **caractérisé en ce que** le polyamide-imide est formé à base d'au moins une autre diamine (E) différente du composant (C), la fraction de diamine formée par le composant (C) dans le polyamide-imide total étant d'au moins 20 % en moles, ou dans la plage allant de 80 à 20 % en moles ou dans la plage allant de 30 à 70 % en moles, le reste jusqu'à 100 % en moles étant formé par le composant (E),
et/ou **en ce que** le polyamide-imide est formé à base d'au moins une autre diamine (E) différente du composant (C), le composant (E) étant choisi dans le groupe suivant : une diamine aliphatique linéaire ou ramifiée de 4 à 18 atomes de carbone, ou de 6 à 14 atomes de carbone,
et/ou **en ce que** le polyamide-imide est formé à base d'au moins une autre diamine (E) différente du composant (C), le composant (E) étant choisi dans le groupe suivant : la 1,4-butane-diamine, la 1,5-pentane-diamine, la 2-méthyl-1,5-pentane-diamine, la 2-butyl-2-éthyl-1,5-pentane-diamine, la 1,6-hexane-diamine, la 2,2,4-triméthylhexaméthylène-diamine, la 2,4,4-triméthylhexaméthylène-diamine, la 1,8-octane-diamine, la 2-méthyl-1,8-octane-diamine, la 1,9-nonane-diamine, la 1,10-décane-diamine, la 1,11-undécane-diamine, la 1,12-dodécane-diamine, la 1,13-tridécane-diamine, la 1,14-tétradécane-diamine, la 1,15-pentadécane-diamine, la 1,16-hexadécane-diamine, la 1,17-heptadécane-diamine, la 1,18-octadécane-diamine, la méta-xylylène-diamine et la para-xylylène-diamine ou leurs mélanges.

10. Matériau de moulage selon l'une quelconque des revendications précédentes, **caractérisé en ce que**, dans le polyamide-imide, l'acide imido-dicarboxylique (AB) est choisi dans le groupe constitué par : l'acide triméllitimidocapronique, l'acide triméllitimidoundécanoïque, l'acide triméllitimidolaurique ou un mélange de ceux-ci, et **en ce que** la diamine cycloaliphatique (C) est choisie dans le groupe constitué par : le bis-(4-amino-3-méthyl-cyclohexyl)-méthane (MACM), le bis-(4-amino-cyclohexyl)-méthane (PACM) ou un mélange de ceux-ci, notamment uniquement le bis-(4-amino-3-méthyl-cyclohexyl)-méthane (MACM),
et/ou **en ce que**, dans le polyamide-imide, l'acide imido-dicarboxylique (AB) est choisi dans le groupe constitué par : l'acide triméllitimidocapronique, l'acide triméllitimidoundécanoïque, l'acide triméllitimidolaurique ou un mélange de ceux-ci, et **en ce que** la diamine cycloaliphatique (C) est choisie dans le groupe constitué par : le bis-(4-amino-3-méthyl-cyclohexyl)-méthane (MACM), le bis-(4-amino-cyclohexyl)-méthane (PACM) ou un mélange de ceux-ci, et l'acide imido-dicarboxylique (AB), en cas de mélange de différents acides imido-dicarboxyliques (AB), la somme de ces acides dicarboxyliques, est présent dans le polyamide-imide par rapport à la diamine cycloaliphatique (C), ou en cas de mélange de différentes diamines cycloaliphatiques (C), par rapport à la somme de ces diamines, en un rapport molaire de 1:1.

11. Matériau de moulage selon l'une quelconque des revendications précédentes, **caractérisé en ce que** le polyamide-imide est formé à base d'au moins un autre diacide (D) différent du composant (AB), et cet autre acide dicarboxylique (D) est l'acide téréphtalique, l'acide isophtalique, l'acide adipique ou l'acide cyclohexane-1,3-dicarboxylique ou un mélange de ceux-ci.

12. Matériau de moulage selon l'une quelconque des revendications précédentes, **caractérisé par** une proportion de (F2) dans la plage allant de 10 à 70 % en poids, ou dans la plage allant de 20 à 60 % en poids.

13. Matériau de moulage selon l'une quelconque des revendications précédentes, **caractérisé en ce qu'**en tant que composant (F2), des matières renforçantes et/ou des charges fibreuses et/ou particulaires sont ajoutées, y compris les fibres de verre, les fibres de carbone, les fibres métalliques ou plastiques, celles-ci pouvant présenter une section transversale arrondie ou plate, les charges particulaires à base de talc, de mica, de silicate, de quartz, de dioxyde de titane, de wollastonite, de kaolin, de silices amorphes, de carbonate de magnésium, d'hydroxyde de magnésium, de craie, de chaux, de feldspath, de sulfate de baryum, de billes de verre pleines ou creuses ou de verre broyé, de composés métalliques magnétiques ou magnétisables et/ou d'alliages, les charges pouvant être traitées en surface.

14. Matériau de moulage selon l'une quelconque des revendications précédentes, **caractérisé en ce qu'**en tant que composant (F3), des stabilisateurs, des agents de nucléation, des adjuvants d'usinage et/ou des modificateurs de la résistance aux impacts sont contenus, jusqu'à 45 % en poids d'un ou de plusieurs modificateurs de la résistance aux impacts, ou dans la plage comprise entre 5 et 30 % en poids, étant contenus.

15. Article comprenant au moins une zone ou une couche en un matériau de moulage selon l'une quelconque des revendications précédentes, qui peut consister en une feuille, une pièce d'insertion, un profilé, un tube, un corps creux, un filtre optiquement variable, une lentille optique, ou en une lentille ophtalmique, la transmission de lumière, à chaque fois déterminée à 23 °C selon ASTM D-1003 (type de lumière C) sur des plaques de 60 x 60 x 2 mm, étant d'au moins 80 % ou d'au moins 85 % ou d'au moins 88 %.

16. Procédé de fabrication d'un matériau de moulage selon l'une quelconque des revendications 1 à 14, **caractérisé en ce que** le polyamide-imide est fabriqué par formation, dans une première étape de réaction, d'un acide imido-dicarboxylique (AB) ou un dérivé de celui-ci, choisi dans le groupe des acides imido-dicarboxyliques (AB) ayant les formules structurales suivantes : 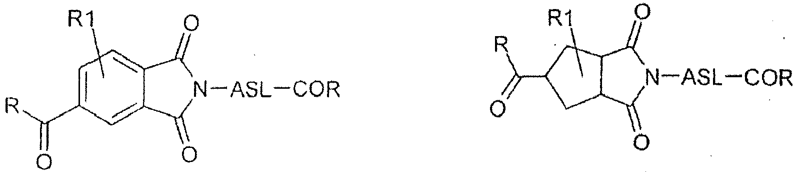 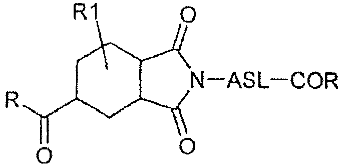 dans lesquelles
ASL = (CH₂)₅₋₁₁, phénylène, (ylométhyl) phényle, bis(ylométhyl)benzène, cyclohexanediyle, (ylométhyl)cyclohexyle, bis(ylométhyl)cyclohexane, cyclopentanediyle, (ylométhyl)cyclopentyle, bis(ylométhyl)cyclopentane,
R = OH, O-alkyle, O-aryle, Cl, NH-ASL-COOH, Br, O-(CO)-alkyle, O-(CO)-aryle,
R1 = H, méthyle, éthyle, propyle, à condition que le cycle puisse être substitué une ou deux fois et, qu'en cas de substitution double du cycle, les deux substituants puissent être choisis dans le groupe, en pouvant toutefois être différents ; à partir des acides tricarboxyliques cycloaliphatiques ou aromatiques correspondants contenant au moins deux groupes carboxyle vicinaux (A) ou leurs dérivés et d'un acide aminocarboxylique ou d'un lactame (B), et, lors d'une deuxième étape séparée ultérieure, mise en réaction de ces acides imido-dicarboxyliques (AB) ou leurs dérivés avec des diamines cycloaliphatiques (C), choisies dans le groupe constitué par : le bis-(4-amino-3-méthyl-cyclohexyl)-méthane (MACM), le bis-(4-amino-cyclohexyl)-méthane (PACM), le bis-(4-amino-3-éthyl-cyclohexyl)-méthane (EACM), le bis-(4-amino-3,5-diméthyl-cyclohexyl)-méthane (TMDC), le 2,6-bis-(aminométhyl)-norbornane, le 1,3-bis-(aminométhyl)cyclohexane, le 1,4-bis-(aminométhyl)cyclohexane, le 2,2-(4,4'-diaminodicyclohexyl)propane (PACP) ou les mélanges de ces diamines cycloaliphatiques, ainsi qu'éventuellement d'autres diacides (D) différents du composant (AB) et/ou d'autres diamines (E) différentes du composant (C), y compris non aromatiques, pour former le polyamide-imide.
